# FASCICULE DE BREVET EUROPEEN

(11) **EP 3 949 925 B1**
(45) Date de publication et mention de la délivrance du brevet: **14.06.2023**
(21) Numéro de dépôt: 21185750.3
(22) Date de dépôt: 15.07.2021
(51) Int. Cl.: A61G 7/08, A61G 5/04, B62B 5/00, B62B 3/12, B62B 3/06

(54) **SYSTEME DE PROPULSION ELECTRIQUE AMOVIBLE POUR UN OBJET ROULANT - PREHENSION ET LEVAGE DES ROUES SILMULTANES ET COMBINES DANS LA DIRECTION LONGITUDINALE**
ABNEHMBARES ELEKTRISCHES ANTRIEBSSYSTEM FÜR EIN ROLLENDES OBJEKT, GLEICHZEITIGES UND KOMBINIERTES GREIFEN UND ENTFERNEN DER RÄDER IN LÄNGSRICHTUNG
REMOVABLE ELECTRIC PROPULSION SYSTEM FOR A ROLLING OBJECT - SIMULTANEOUS GRIPPING AND LIFTING OF WHEELS AND COMBINED IN THE LONGITUDINAL DIRECTION

(30) Priorité: 04.08.2020 FR 2008261
(43) Date de publication de la demande: 09.02.2022
(73) Titulaire: IFP Energies nouvelles, 92500 Rueil-Malmaison (FR)
(72) Inventeur: VENTURI, Stephane, 92852 Rueil-Malmaison Cedex (FR); LECOINTE, Bertrand, 92852 Rueil-Malmaison Cedex (FR)
(74) Mandataire: IFP Energies nouvelles

(56) Documents cités:
- WO-A1-03/034970
- WO-A1-2013/156030
- FR-A1- 2 807 941

## Description

### Domaine technique

L'invention concerne le domaine de transport des objets roulants, par exemple des lits roulants, par exemple des lits d'hôpitaux, et plus particulièrement des fauteuils roulants.

Le déplacement des charges lourdes roulantes par un utilisateur peut entraîner des difficultés pour l'utilisateur, en particulier si cette action est répétée, telles que des troubles musculo-squelettiques.

### Technique antérieure

Afin de rendre le déplacement des charges lourdes roulantes plus facile et plus ergonomique, il a été envisagé d'équiper ces charges lourdes de machines électriques. Par exemple, une première idée a consisté à équiper chaque lit d'hôpital d'un système d'entraînement électrique des roues. Une telle solution est onéreuse, car elle nécessite le remplacement ou la modification de l'ensemble des lits, ce que les hôpitaux ne peuvent pas se permettre. De plus, le système d'entraînement et sa batterie augmentent le poids du lit. Par conséquent, lorsque la batterie est déchargée, les efforts à fournir pour déplacer le lit sont plus importants.

De la même façon, dans le domaine de la logistique ou du commerce, il a été envisagé de rendre électrique tous les chariots. Là aussi, une telle solution est onéreuse.

Une alternative est de prévoir un système amovible de propulsion des objets roulants. Plusieurs solutions techniques ont été envisagées.

Par exemple, la demande de brevet WO 01/85086 décrit un système de propulsion motorisé pour un lit. Le système de propulsion est configuré pour s'atteler à un ou plusieurs points du lit. De par les moyens d'attelage prévus pour ce système de propulsion, ce système ne peut pas être universel et adapté à différents objets roulants. En effet, il ne peut pas être attelé à un objet roulant non muni d'une pièce d'attelage. De plus, pour ce système de propulsion, toutes les roues de l'objet roulant restent en contact avec le sol. Par conséquent, l'orientation de l'attelage (système de propulsion et lit) est plus compliquée, les forces de frottement sont élevées, et la roue motorisée nécessite plus de puissance.

La demande de brevet WO 2012/171079 décrit un deuxième système de propulsion d'un lit d'hôpital. Le système de propulsion est configuré pour lever deux roues du lit. Toutefois, le mécanisme de préhension des roues est complexe et encombrant : la dimension latérale (direction parallèle à l'axe des roues motorisées) est importante (supérieure à la largeur des roues du lit) et peut dépasser les dimensions latérales du lit, ce qui peut être gênant pour le déplacement du lit, en particulier dans un espace réduit tel qu'un couloir ou un ascenseur d'hôpital.

La demande de brevet WO 2013/156030 décrit un troisième système de propulsion d'un lit d'hôpital. Le système de propulsion est configuré pour lever deux roues du lit. Toutefois, le système de levage nécessite plusieurs actuateurs. Il est donc complexe.

On connaît également la demande de brevet français FR3089786 de la demanderesse. Cette solution permet de lever les roues de l'objet roulant une fois celles-ci à 90°, dans la direction transversale, de manière à assurer l'attelage du lit roulant au système de propulsion électrique. Toutefois, ce système n'est pas adapté aux objets roulants qui disposent de roues non orientables comme les roues arrières des fauteuils roulants.

Afin de permettre la préhension et le levage des roues de l'objet roulant de manière simple et rapide aussi bien pour des objets roulants avec des roues orientables qu'avec des roues non orientables, la présente invention concerne un système de propulsion électrique amovible pour un objet roulant. Le système de propulsion comprend un châssis muni d'au moins une roue entrainée par une machine électrique. Le système de propulsion comprend également au moins une roue non entraînée (de préférence, deux roues non entraînées) et au moins un moyen d'attelage du système de propulsion électrique à l'objet roulant. De plus, le moyen d'attelage comprend au moins un moyen de préhension et de levage combinés et simultanés d'au moins une roue de l'objet roulant, et le moyen de préhension et de levage combinés et simultanés comprend un bâti, au moins un bras extensible dans une direction longitudinale connecté au bâti, au moins un élément basculant et au moins un dispositif de poussée, l'élément basculant et le dispositif de poussée étant pour l'un connecté audit bras extensible et pour l'autre connecté au bâti, le dispositif de poussée étant apte à pousser au moins une roue de l'objet roulant selon la direction longitudinale dans au moins un élément basculant, l'élément basculant étant apte à basculer autour d'un axe de direction sensiblement transversale, orthogonale à la direction longitudinale dans le plan horizontal.

De ce fait, une fois attelé, les roues de l'objet roulant sont dans la direction longitudinale qui correspond à la direction principale de déplacement du système de propulsion électrique.

### Résumé de l'invention

L'invention concerne un système de propulsion électrique amovible pour un objet roulant, ledit système de propulsion comprenant un châssis muni d'au moins une roue entrainée par une machine électrique, au moins une roue non entraînée et au moins un moyen d'attelage dudit système de propulsion électrique audit objet roulant. De plus, ledit moyen d'attelage comprend au moins un moyen de préhension et de levage combinés et simultanés d'au moins une roue dudit objet roulant. En outre, ledit moyen de préhension et de levage combinés et simultanés comprend un bâti, au moins un bras extensible dans une direction longitudinale connecté au bâti, au moins un élément basculant et au moins un dispositif de poussée, l'élément basculant et le dispositif de poussée étant pour l'un connecté audit bras extensible et pour l'autre connecté au bâti, ledit dispositif de poussée étant apte à pousser au moins une roue de l'objet roulant selon ladite direction longitudinale dans ledit au moins un élément basculant, ledit élément basculant étant apte à basculer autour d'un axe de direction sensiblement transversale.

De préférence, ledit bras extensible supporte au moins une de ladite au moins une roue non entraînée.

Selon une variante de l'invention, ledit moyen de préhension et de levage combinés et simultanés comprend au moins un dispositif de limitation du débattement angulaire d'au moins un élément basculant.

Avantageusement, une butée d'accostage est positionnée sur ledit bâti ou sur ledit élément basculant.

Selon un mode de réalisation de l'invention, ledit dispositif de poussée comprend au moins un galet d'axe transversal fixé sur ledit bras extensible ou sur ledit bâti.

De préférence, ledit dispositif de poussée comprend un premier et un deuxième galet d'axes transversaux fixés sur ledit bras extensible ou sur ledit bâti, ledit premier galet étant configuré pour venir en contact de la roue de l'objet roulant avant le deuxième galet, l'altitude de l'axe du premier galet étant inférieure à l'altitude de l'axe du deuxième galet.

De manière préférée, le premier galet a un diamètre inférieur au deuxième galet.

Selon une configuration de l'invention, ledit moyen d'attelage est réglable en position longitudinale le long du châssis.

De manière avantageuse, le dispositif de poussée comprend deux pièces guides s'étendant sensiblement dans la direction longitudinale, lesdites pièces guides étant configurées pour empêcher les roues de l'objet roulant de pivoter.

Selon une mise en oeuvre de l'invention, au moins un élément basculant comprend un moyen de réglage de la largeur dudit élément basculant, ledit moyen de réglage de la largeur dudit élément basculant étant de préférence un flasque mobile ou une cale.

De préférence, le système de propulsion électrique comprend deux moyens de préhension et de levage combinés et simultanés, chaque moyen de préhension et de levage combinés et simultanés étant dédié à une roue de l'objet roulant, les deux moyens de préhension et de levage combinés et simultanés étant mobile en translation transversale l'un par rapport à l'autre.

Selon un mode de réalisation de l'invention, ledit bâti est relié audit châssis par une liaison glissière de direction transversale, de préférence par un actionneur.

Selon une variante de l'invention, le moyen de préhension et de levage combinés et simultanés comprend un dispositif de relevage configuré pour garantir une garde au sol supérieure à une hauteur prédéfinie en position relevée, de préférence, la hauteur prédéfinie étant comprise entre 30 et 50mm, et encore préférentiellement proche de 40mm. Préférentiellement, le dispositif de relevage comprend au moins un ressort de rappel et/ou au moins un contrepoids et/ou au moins une tige entraînée.

De manière avantageuse, une (deuxième) butée est positionnée sur ledit bâti ou sur ledit bras extensible pour assurer le contact de l'élément basculant en position relevée.

L'invention concerne aussi un attelage comprenant un objet roulant, de préférence un objet roulant comprenant au moins une roue non orientable, et un système de propulsion électrique tel que décrit précédemment, ledit objet roulant étant attelé audit système de propulsion électrique par ledit moyens d'attelage.

En outre, l'invention concerne également un procédé pour atteler un objet roulant au système de propulsion électrique tel que décrit précédemment, le procédé comprenant les étapes suivantes :
a) on déplace le système de propulsion électrique de manière à l'approcher d'au moins une roue de l'objet roulant,
b) on allonge le bras extensible de manière à permettre le positionnement de ladite au moins une roue de l'objet roulant entre l'élément basculant et le dispositif de poussée,
c) on déplace le système de propulsion électrique de manière à ce que ladite au moins une roue de l'objet roulant soit positionnée entre l'élément basculant et le dispositif de poussée,
d) on raccourcit le bras extensible de manière à ce que le dispositif de poussée ou l'élément basculant vienne en contact avec ladite au moins une roue de l'objet roulant,
e) on continue le raccourcissement du bras extensible de manière à ce que le dispositif de poussée pousse ladite au moins une roue de l'objet roulant dans l'élément basculant.

De préférence, ledit système de propulsion électrique comprend deux moyens de préhension et de levage combinés et simultanés et ledit procédé comprend au moins les étapes suivantes :
a) on déplace le système de propulsion électrique de manière à l'approcher de deux roues de l'objet roulant,
b) on déplace transversalement au moins un des deux moyens de préhension et de levage combinés et simultanés par rapport à l'autre des deux moyens de préhension et de levage combinés et simultanés,
c) on allonge le bras extensible de chaque moyen de préhension et de levage combinés et simultanés de manière à ce que l'écartement entre l'élément basculant et le dispositif de poussée laisse passer une roue de l'objet roulant,
d) on déplace transversalement au moins un des deux moyens de préhension et de levage combinés et simultanés par rapport à l'autre des deux moyens de préhension et de levage combinés et simultanés, en sens opposé de celui de l'étape b) jusqu'à ce que chaque roue de l'objet roulant soit positionnée entre un dispositif de poussée et un élément basculant.
e) on raccourcit les bras extensibles pour pousser chaque roue de l'objet roulant dans chaque élément basculant par le dispositif de poussée.

### Liste des figures

D'autres caractéristiques et avantages du système et du procédé selon l'invention, apparaîtront à la lecture de la description ci-après d'exemples non limitatifs de réalisations, en se référant aux figures annexées et décrites ci-après.
La figure 1 est une vue de dessus d'un système de propulsion électrique selon un premier mode de réalisation de l'invention.
La figure 2 est vue de dessus d'un système de propulsion électrique selon un deuxième mode de réalisation de l'invention.
La figure 3 est une vue de côté d'un système de propulsion électrique selon une première variante de réalisation de l'invention.
La figure 4 est une vue de côté d'un système de propulsion électrique selon une deuxième variante de réalisation de l'invention.
La figure 5 illustre une vue de dessus du système de propulsion attelé à un objet roulant selon l'invention.
La figure 6 illustre les différentes étapes permettant à une première variante d'un moyen de préhension et de levage combiné et simultané de l'invention de prendre et lever une roue de l'objet roulant.
La figure 7 illustre les différentes étapes permettant à une deuxième variante d'un moyen de préhension et de levage combiné et simultané de l'invention de prendre et lever une roue de l'objet roulant.
La figure 8 illustre les différentes étapes permettant à une troisième variante d'un moyen de préhension et de levage combiné et simultané de l'invention de prendre et lever une roue de l'objet roulant.
La figure 9a illustre une première étape d'un procédé pour saisir et lever les roues d'un objet roulant à partir d'un système de propulsion selon l'invention.
La figure 9b illustre une deuxième étape d'un procédé pour saisir et lever les roues d'un objet roulant à partir d'un système de propulsion selon l'invention.
La figure 9c illustre une troisième étape d'un procédé pour saisir et lever les roues d'un objet roulant à partir d'un système de propulsion selon l'invention.
La figure 9d illustre une quatrième étape d'un procédé pour saisir et lever les roues d'un objet roulant à partir d'un système de propulsion selon l'invention.
La figure 9e illustre une cinquième étape d'un procédé pour saisir et lever les roues d'un objet roulant à partir d'un système de propulsion selon l'invention.
La figure 9f illustre une sixième étape d'un procédé pour saisir et lever les roues d'un objet roulant à partir d'un système de propulsion selon l'invention.
La figure 9g illustre une septième étape d'un procédé pour saisir et lever les roues d'un objet roulant à partir d'un système de propulsion selon l'invention.
La figure 10 illustre un autre mode de réalisation du système de propulsion de l'invention.
La figure 11a illustre une configuration d'un mode de réalisation d'un moyen de préhension et de levage combinés et simultanés d'un système de propulsion selon l'invention, avec un dispositif de relevage, en position de repos.
La figure 11b illustre une configuration d'un mode de réalisation d'un moyen de préhension et de levage combinés et simultanés d'un système de propulsion selon l'invention, avec un dispositif de relevage, en position de repos représentée en pointillés et en position relevée représentée en trait continu.
La figure 12 illustre l'effort à appliquer au moyen de préhension et de levage combinés et simultanés et l'élévation de la roue de l'objet roulant, en fonction du déplacement appliqué, pour un premier mode de réalisation du système comprenant un seul basculeur.
La figure 13 illustre l'effort à appliquer au moyen de préhension et de levage combinés et simultanés et l'élévation de la roue de l'objet roulant, en fonction du déplacement appliqué, pour un deuxième mode de réalisation du système comprenant un basculeur et un dispositif de limitation du débattement angulaire.

### Description des modes de réalisation

L'invention concerne un système de propulsion électrique amovible pour un objet roulant.
On appelle système de propulsion électrique, un système amovible permettant d'assister le déplacement de l'objet roulant, afin de limiter les efforts requis pour le déplacement de l'objet roulant. Ce système de propulsion électrique comporte au moins une machine électrique pour son entraînement. Un objet roulant est un objet qui comporte au moins deux roues afin de le déplacer.

L'objet roulant peut être de toute forme, notamment un lit roulant, tel que ceux utilisés dans les hôpitaux, un fauteuil roulant, un chariot, tel qu'utilisé pour la logistique, par exemple la logistique hospitalière ou la logistique commerciale (selon un exemple un chariot de supermarché), tout meuble roulant. Un tel objet roulant comporte au moins deux roues, de préférence trois ou quatre. Selon une variante de l'invention, au moins une roue, de préférence, deux roues de l'objet roulant sont des roues folles (ou orientables), en d'autres termes ce sont des roues décentrées orientables autour d'un axe vertical. L'objet roulant est de préférence non motorisé.

Le système de propulsion électrique de l'invention est particulièrement adapté aux objets roulants qui comprennent des roues non orientables, telles que les roues arrières des fauteuils roulants. Ces roues non orientables sont avantageusement celles qui seront prises et levées dans le système de propulsion électrique de l'invention.

Le système de propulsion électrique selon l'invention comporte :
- un châssis muni d'au moins une roue motorisée, c'est-à-dire une roue entraînée par une machine électrique,
- au moins une roue non motorisée, c'est-à-dire non entraînée par une machine électrique. Cette roue non motorisée peut notamment être connectée au châssis par l'intermédiaire d'un bras extensible dans la direction longitudinale. De préférence, le système comprend au moins deux roues non motorisées.
- au moins un moyen d'attelage du système de propulsion à un objet roulant, le moyens d'attelage comportant au moins un moyen de préhension et de levage combinés et simultanés d'au moins une roue de l'objet roulant. En d'autres termes, le moyen de préhension et de levage combinés et simultanés est configuré pour simultanément agripper (saisir) et lever au moins une roue de l'objet roulant. On entend par un moyen de préhension et de levage combinés et simultanés, un moyen permettant simultanément de prendre et lever au moins une roue de l'objet roulant par une action combinée à l'aide d'un seul actionneur. Le moyen de préhension et de levage combinés et simultanés ne comprend donc qu'une seule commande permettant simultanément la préhension et le levage d'au moins une roue de l'objet roulant. Autrement dit, un tel moyen de préhension et de levage combinés et simultanés se distingue :
   ∘ d'une part, des moyens de préhension et de levage comportant deux commandes distinctes : l'une pour la préhension et l'autre pour le levage ; ces moyens ne permettant pas une action combinée par une seule commande commune.
   ∘ d'autre part, des moyens de préhension et de levage prévus pour des actions successives, même momentanées, de préhension et de levage.

L'utilisation d'un moyen de préhension et de levage combinés et simultanés est particulièrement avantageuse. En effet, par une action combinée de préhension et de levage, la cinématique d'attelage de l'objet roulant au système de propulsion est simplifiée. De plus, cette simplification associée à la simultanéité des actions de préhension et de levage permet de réaliser l'attelage plus rapidement qu'en dissociant ces actions, même partiellement.

Un tel moyen de préhension et de levage combinés et simultanés permet ainsi un attelage simple et rapide de n'importe quel objet roulant (puisqu'aucun dispositif d'attelage n'est nécessaire sur l'objet roulant) sur le système de propulsion. De plus, ce système de propulsion permet de saisir et lever aussi bien des roues orientables que des roues non orientables des objets roulants.

Selon l'invention, le moyen de préhension et de levage combinés et simultanés comprend un bâti, au moins un bras extensible dans une direction longitudinale connecté au bâti, au moins un élément basculant et au moins un dispositif de poussée. L'élément basculant et le dispositif de poussée sont l'un connecté audit bras extensible et l'autre connecté au bâti. Par exemple, l'élément basculant peut être connecté au bâti (par une liaison pivot d'axe transversal par exemple) et le dispositif de poussée peut être connecté (fixé par exemple) au bras extensible. Alternativement, l'élément basculant peut être connecté au bras extensible (par une liaison pivot d'axe transversal par exemple) et le dispositif de poussée peut être connecté (fixé par exemple) au bâti.

Le dispositif de poussée est apte à pousser au moins une roue de l'objet roulant selon la direction longitudinale dans l'élément basculant. Lorsque le dispositif de poussée est positionné sur le bras extensible, un mouvement longitudinal du bras extensible pousse la roue vers puis dans l'élément basculant. Lorsque le dispositif de poussée est positionné sur le bâti, le mouvement longitudinal du bras extensible est transmis à l'élément basculant. Dans ce cas, le dispositif de poussée agit pour empêcher la roue de poursuivre son mouvement longitudinal. Ainsi, le dispositif de poussée pousse (par un effort appliqué par la roue de l'objet roulant sur le dispositif de poussée) la roue dans l'élément basculant. De ce fait, l'élément basculant et le dispositif de poussée sont en face l'un de l'autre le long d'une direction longitudinale.

De plus, l'élément basculant est apte à basculer autour d'un axe de direction sensiblement transversale.

Ainsi, par un mouvement du bras extensible dans la direction longitudinale et orienté vers le bâti, il est possible de pousser la roue de l'objet roulant, grâce au dispositif de poussée, dans l'élément basculant. De plus, à partir du contact de la roue avec l'élément basculant, la poursuite de l'action longitudinale du bras extensible permet de saisir et de lever la roue de l'objet roulant dans l'élément basculant. L'élément basculant est conçu pour basculer de manière automatique sous l'effet des efforts de la roue de l'objet roulant et de son déplacement dans la direction longitudinale. De ce fait, l'élément basculant ne dispose d'aucun moyen de commande de basculement.

En outre, l'élément basculant est relié au bâti ou au bras extensible par une liaison pivot dans une direction sensiblement transversale. De ce fait, l'élément basculant peut basculer autour de cet axe transversal lorsque la roue de l'objet roulant se déplace dans la direction longitudinale.

L'élément basculant peut notamment être un basculeur. Un basculeur selon l'invention comprend une pièce coudée en deux parties, cette pièce coudée étant en liaison pivot autour d'un axe, de préférence de direction transversale, autour duquel il peut basculer. Les deux parties de la pièce coudée se joignent sensiblement au niveau de l'axe transversal servant de pivot. En d'autres termes, le coude du basculeur se trouve au niveau de l'axe transversal. La roue de l'objet roulant vient en contact d'abord avec une des deux parties sur un premier point de contact, bascule autour du premier point de contact et vient ensuite au contact d'un deuxième point de contact sur l'autre partie du basculeur. Le déplacement longitudinal de la roue, poussée par le dispositif de poussée déplace le centre de gravité de l'ensemble, par rapport à l'axe de pivot transversal et fait basculer l'ensemble autour de cet axe de pivot.

Le bâti est relié au châssis soit par une fixation soit par une liaison glissière. La fixation au châssis peut notamment être utilisée lorsqu'on envisage de prendre une seule roue de l'objet roulant (un tricycle par exemple). La liaison glissière permet un degré d'adaptation du système amélioré pour pouvoir prendre deux roues de l'objet roulant.

Par l'exemple, une roue motorisée peut être placée à une extrémité longitudinale du châssis et deux roues non motorisées peuvent être placées à l'autre extrémité longitudinale du système de propulsion, sur le bras extensible, l'axe vertical de la roue motorisée étant de préférence placé, en vue de dessus, sur la médiatrice des axes verticaux des roues non motorisées en vue de dessus. De ce fait, la médiatrice des axes verticaux s'étend dans la direction longitudinale du châssis (et du système de propulsion).

Les roues non entraînées du système de propulsion et/ou celles de l'objet roulant peuvent comprendre des roues décentrées orientables.

Par roues décentrées orientables, on entend des roues folles décentrées et orientables autour d'un axe vertical. En d'autres termes, ces roues peuvent pivoter par rapport au châssis autour d'un axe d'orientation verticale, et l'axe de rotation de la roue est décentré (non concourant) par rapport à l'axe d'orientation verticale. Ainsi, un mouvement appliqué au châssis tend à orienter la roue dans la direction opposée au déplacement issu du mouvement appliqué au châssis. Les roues s'orientent donc de manière automatique, facilitant ainsi la manoeuvrabilité du système.

Par roues non orientables, on entend des roues qui ne peuvent pas pivoter par rapport au châssis ou à l'objet roulant lui-même.

De préférence, le système de propulsion électrique peut comporter un guidon, permettant la manipulation, le déplacement et l'orientation du système de propulsion électrique par un utilisateur.

L'attelage de l'objet roulant au système de propulsion est réalisé par au moins une roue de l'objet roulant, qui peut être une roue folle (orientable par effet de l'excentration de l'axe vertical par exemple) ou une roue non orientable de l'objet roulant. L'objet roulant ne nécessite donc pas d'être adapté pour le système de propulsion électrique, ce qui rend le système de propulsion électrique universel à différents objets roulants. De préférence, l'attelage de l'objet roulant au système de propulsion peut être réalisé par deux roues de l'objet roulant, ce qui simplifie le procédé d'attelage et le moyen d'attelage associé.

Dans la présente description, les termes « longitudinaux », « transversaux », « horizontaux » et « verticaux » déterminent les axes et/ou directions du système lorsque le système est posé sur un sol plan et de niveau (c'est-à-dire sur un sol sans pente, en d'autres termes, il n'y a pas de différences d'altitude sur le sol) et en situation de fonctionnement.

La direction longitudinale correspond à la direction principale de déplacement du système de propulsion électrique, c'est-à-dire celle qui minimise l'énergie nécessaire au déplacement du système.

La direction transversale (également appelée latérale dans la suite de la description) est la direction orthogonale à la direction longitudinale du système dans le plan horizontal.

La direction verticale est orthogonale au plan horizontal du système.

Selon une mise en oeuvre préférée de l'invention, le bras extensible peut supporter au moins une roue non entraînée. La position de la roue non entraînée sur le bras extensible permet de participer à la reprise du poids lorsqu'un objet roulant est attelé au système de propulsion. De plus, la roue non entraînée peut ainsi être positionnée à une extrémité longitudinale du système de propulsion, ce qui permet d'améliorer la manoeuvrabilité et de limiter le nombre de roues nécessaires au système.

De préférence, le moyen de préhension et de levage combinés et simultanés peut comprendre au moins un dispositif de limitation du débattement angulaire d'au moins un élément basculant. Le dispositif de limitation du débattement angulaire peut notamment limiter le débattement angulaire d'au moins un élément basculant. De ce fait, l'effort pour initier le mouvement de préhension et de levage des roues de l'objet roulant peut être réduit. En quelque sorte, le dispositif de limitation de débattement angulaire agit de manière similaire à l'ajout d'un élément basculant dans le système. Le dispositif de limitation du débattement angulaire facilite ainsi la préhension et la levée initiale de la roue de l'objet roulant. Le dispositif de limitation du débattement angulaire permet également de positionner le point le plus bas de l'élément basculant par rapport au sol et ainsi de définir l'altitude du contact entre l'élément basculant et la roue de l'objet roulant.

Selon une mise en oeuvre avantageuse de l'invention, une butée d'accostage peut être positionnée sur le bâti ou sur l'élément basculant. Elle peut avantageusement être fixée sur le bâti ou sur l'élément basculant. La butée d'accostage peut notamment comprendre une pièce dans la direction longitudinale érigée en direction du dispositif de poussée. Cette butée d'accostage a pour but de permettre le contact entre la roue de l'objet roulant et le moyen de préhension et de levage combinés et simultanés. Elle peut également permettre d'arrêter le déplacement transversal de ce moyen de préhension et de levage combinés et simultanés lorsque celui-ci peut se déplacer latéralement. Cette butée d'accostage permet également au système d'amortir le choc dû au contact. Elle peut comprendre une partie en caoutchouc ou en matériau permettant d'absorber les chocs (élastomères par exemple).

Le contact entre la butée d'accostage et la roue de l'objet roulant permet d'améliorer le positionnement de la roue afin de faciliter sa préhension et son levage dans le système de propulsion électrique.

Avantageusement, le dispositif de poussée peut comprendre au moins un galet d'axe transversal fixé sur un support connecté au bras extensible ou au bâti. Par exemple, le support peut être fixé au bras extensible ou au bâti. Alternativement, le support peut être relié au bras extensible ou au bâti par une liaison glissière de direction transversale. Ainsi le galet est sensiblement dans la direction transversale, ce qui permet de pousser la roue de l'objet roulant dans la direction longitudinale. Le galet est prévu pour assurer le contact du dispositif de poussée avec la roue. Le dispositif de poussée avec au moins un galet permet d'améliorer la durée de vie du système. Le positionnement du galet sur le bras extensible permet de pousser la roue de l'objet roulant en direction de l'élément basculant grâce au déplacement longitudinal du bras extensible. De plus, lorsque l'objet roulant est déjà en contact avec l'élément basculant, le galet sert à créer le mouvement de levage avec l'aide de l'élément basculant.

Selon une variante préférée de l'invention, le dispositif de poussée peut comprendre un premier et un deuxième galet d'axes transversaux fixés sur un support connecté au bras extensible ou au bâti. Autrement dit, les deux galets sont parallèles entre eux. De plus, le premier galet peut être configuré pour venir en contact de la roue de l'objet roulant avant le deuxième galet. En d'autres termes, la distance entre l'élément basculant et le premier galet est plus faible que la distance entre l'élément basculant et le deuxième galet. De plus l'altitude de l'axe du premier galet peut être inférieure à l'altitude de l'axe du deuxième galet. De ce fait, le premier galet sert notamment à initier la poussée de la roue de l'objet roulant jusqu'à ce qu'elle vienne en contact avec l'élément basculant ou à arrêter le déplacement longitudinal de la roue entraînée par l'élément basculant, lui-même entraîné par le bras extensible. Ainsi, il est préférable que ce premier galet ne soit pas positionné trop haut. Puis, lorsque la roue de l'objet roulant se lève progressivement, la roue entre progressivement en contact avec le deuxième galet. Le positionnement de ce deuxième galet constitue un obstacle permettant d'assurer le maintien de la roue de l'objet roulant dans l'élément basculant.

Selon une variante avantageuse de l'invention, le premier galet peut avoir un diamètre inférieur au deuxième galet. De ce fait, le premier galet ayant un diamètre réduit, la roue, une fois qu'elle commence à être levée peut venir en contact avec le deuxième galet. De plus, comme le deuxième galet a un diamètre plus grand, il constitue un meilleur obstacle pour s'assurer du maintien de la roue de l'objet roulant dans l'élément basculant.

Les modes de réalisation à double galets permettent une grande adaptabilité du système pour différents diamètres de roues d'objet roulant.

Selon une configuration de l'invention, le moyen d'attelage peut être réglable en position longitudinale le long du châssis. Autrement dit, le moyen d'attelage peut être déplacé longitudinalement le long du châssis de manière à encore améliorer l'adaptabilité du moyen d'attelage à différents objets roulants. Pour se faire, le moyen d'attelage peut être relié au châssis par une liaison glissière d'axe longitudinal. Le déplacement longitudinal du moyen d'attelage peut être réalisé manuellement et une fois le déplacement réalisé, on peut maintenir cette position par exemple par une goupille qui peut être mise en oeuvre dans différents orifices répartis longitudinalement. Le déplacement longitudinal peut alternativement être assuré par un actionneur tel qu'un vérin hydraulique, pneumatique ou électrique. Le réglage longitudinal peut notamment permettre d'améliorer la compacité de l'ensemble et/ou d'améliorer la stabilité de l'attelage, par exemple pour un fauteuil roulant qui comprend un coffre à l'arrière du fauteuil.

Avantageusement, le dispositif de poussée peut comprendre au moins deux pièces guides s'étendant sensiblement dans la direction longitudinale. Par exemple, ces deux pièces guides peuvent être positionnées de part et d'autre d'un galet, ces deux pièces guides étant dirigées en direction de l'élément basculant. Ces deux pièces guides peuvent être configurées pour empêcher les roues de l'objet roulant, lorsqu'elles sont orientables, de pivoter lors du déplacement du dispositif de poussée en direction de l'élément basculant. Ainsi, le système facilite la préhension et le levage de roues orientables de l'objet roulant dans l'élément basculant.

Selon une variante de l'invention, au moins un élément basculant peut comprendre un moyen de réglage de la largeur de l'élément basculant. Ainsi, la largeur de l'élément basculant peut être adaptée à la largeur de la roue de l'objet roulant. L'élément basculant avec le moyen de réglage de la largeur permet une adaptation aux roues simples et aux roues jumelées. Les roues simples sont composées d'une seule roue autour d'un axe horizontal de rotation. Les roues jumelées sont composées de deux roues tournant autour d'un même axe de rotation horizontal. Le moyen de réglage de la largeur de l'élément basculant permet d'améliorer la préhension et le levage des roues de l'objet roulant, notamment lorsqu'elles sont orientables, ainsi que leur immobilisation, le moyen de réglage de la largeur de l'élément roulant permettant de limiter le jeu entre la roue de l'objet roulant et l'élément basculant.

Par largeur de l'élément basculant, on entend la distance entre les extrémités de l'élément basculant, les extrémités s'étendant le long de l'axe de rotation de l'élément basculant. Par exemple, lorsque l'axe de l'élément basculant est sensiblement transversal, la largeur de l'élément basculant est la distance, selon la direction transversale, des extrémités de l'élément basculant. La largeur de l'élément basculant s'adapte ainsi à la largeur de la roue, qui peut être une roue simple ou jumelée.

Alternativement, pour le cas de roues non orientables, la largeur des basculeurs peut être prévue suffisamment large pour s'adapter aussi bien aux roues simples qu'aux roues jumelées. En d'autres termes, la largeur des basculeurs est supérieure à la largeur maximale des roues simples et/ou jumelées des objets roulants prévus pour être attelés au système de propulsion électrique.

Préférentiellement, le moyen de réglage de la largeur de l'élément basculant peut être un flasque mobile. Un flasque mobile est une pièce, par exemple une plaque ou un morceau de plaque, mobile en translation dans la direction de l'axe de l'élément basculant. Ainsi, l'utilisateur peut positionner le flasque à la largeur adaptée à la roue de l'objet roulant.

Selon une autre variante, le moyen de réglage de la largeur de l'élément basculant peut être une cale. De ce fait, la cale peut être mise en place ou retirée de l'élément basculant. Un jeu de cales peut être utilisé, de manière à s'adapter à différentes largeurs de roues de l'objet roulant. La cale peut être amovible.

Selon un mode de réalisation préféré de l'invention, le moyen d'attelage peut être configuré pour réaliser simultanément la préhension et le levage d'au moins deux roues de l'objet roulant. Ainsi, le système peut comprendre deux moyens de préhension et de levage combinés et simultanés, chacun étant configuré pour saisir et lever une roue distincte de l'objet roulant. De plus, les deux moyens de préhension et de levage combinés et simultanés peuvent être mobiles en translation transversale l'un par rapport à l'autre. De ce fait, il est possible de positionner les éléments basculants et dispositifs de poussée de manière à ce que chacune des deux roues de l'objet roulant à saisir soit entre un élément basculant et un dispositif de poussée.

Les deux bras extensibles de chaque moyen de préhension et de levage combinés et simultanés peuvent alors être actionnés par un même moyen de commande. Autrement dit, le moyen de commande commun commande simultanément deux actionneurs, des vérins par exemple, permettant à chacun des bras extensibles de s'allonger ou de rétrécir de manière simultanée.

Alternativement, le système peut comprendre un moyen de préhension et de levage combinés et simultanés permettant de saisir et lever les deux roues de l'objet roulant. Par exemple, deux dispositifs de poussée peuvent alors être reliés à un même bras extensible, l'un au moins des dispositifs de poussée étant relié au bras extensible par une liaison glissière dans la direction transversale pour permettre l'écartement ou le rapprochement relatif des deux dispositifs dans la direction latérale. De manière similaire, l'un au moins des deux éléments basculants est relié par une glissière au bâti de manière à permettre le positionnement des deux éléments basculants en face des roues de l'objet roulant à saisir.

Selon une configuration de l'invention, le bâti peut être relié au châssis par une liaison glissière de direction transversale, par exemple par un actionneur, tel qu'un vérin hydraulique, électrique ou pneumatique. Cette configuration est particulièrement avantageuse lorsqu'on veut saisir et lever simultanément deux roues de l'objet rouant. En effet, la liaison glissière transversale permet d'écarter ou de rapprocher les éléments basculants et dispositifs de poussée, grâce à la liaison glissière transversale, de manière à les positionner de manière à ce que les roues de l'objet roulant soient entre les éléments basculants et les dispositifs de poussée et ainsi faciliter les opérations simultanées et combinées de saisie et de levée des roues de l'objet roulant. On peut par exemple éloigner les bâtis grâce à la liaison glissière transversale. On fait ensuite avancer le système de propulsion et/ou on écarte le bras extensible de manière à éloigner chaque dispositif de poussée de l'élément basculant en vis-à-vis de manière à permettre le positionnement de chacune des deux roues de l'objet roulant entre le dispositif de poussée et l'élément basculant de chaque moyen de préhension et de levage combinés et simultanés. Puis, on rapproche les deux bâtis l'un de l'autre, grâce à la liaison glissière transversale, de manière à mettre chacune des deux roues de l'objet roulant à saisir entre un élément basculant et le dispositif de poussée en vis-à-vis.

De préférence, le moyen de préhension et de levage combinés et simultanés peut comprendre un dispositif de relevage configuré pour garantir une garde au sol supérieure à une hauteur prédéfinie en position relevée. En effet, en position repos du moyen de préhension et de levage combinés et simultanés, la position repos étant définie par la position du moyen de préhension et de levage combinés et simultanés libre de tout mouvement et donc ne supportant aucune roue, au moins une partie de l'élément de saisie (l'élément basculant par exemple) peut être proche du sol pour faciliter la préhension et le levage de la roue de l'objet roulant. Cette position est donc avantageuse pour faciliter l'attelage mais elle est particulièrement gênante lorsqu'on veut manipuler le système de propulsion, sans être attelé à un objet roulant, par exemple lorsqu'un utilisateur utilise le système de propulsion en mode trottinette, debout sur une plateforme supportée par le châssis, car la garde au sol est alors très limitée. Ainsi, en position repos, le système de propulsion risque de se bloquer, de s'arrêter régulièrement dès qu'un petit obstacle apparaît. De plus, cette faible garde au sol risque d'entraîner des dommages au moyen de préhension et de levage combinés et simultanés. C'est pour cette raison, qu'un dispositif de relevage peut être prévu. Le dispositif de relevage permet de relever (remonter) les éléments de saisie (éléments basculants par exemple), sans qu'une roue de l'objet roulant soit saisie et levée, de manière à augmenter la garde au sol. Une garde au sol de 40 mm environ par exemple permet de conserver un système compact et facile d'utilisation et de limiter les risques de blocage du système et les dommages. Ce dispositif de relevage est également avantageux pour utiliser le système de propulsion en mode trottinette de manière à éviter une chute de l'utilisateur.

Préférentiellement, la hauteur prédéfinie peut être comprise entre 30 et 50mm, de préférence proche de 40mm, de manière à offrir une garde au sol suffisante.

De manière avantageuse, le dispositif de relevage peut comprendre au moins un ressort de rappel et/ou au moins un contrepoids et/ou au moins une tige entraînée.

Un ressort de rappel peut permettre de ramener un élément basculant par exemple en position relevée, dès que le système n'est pas attelé à un objet roulant. Le rappel en position relevée est alors automatique.

Un contrepoids, positionné sur un élément basculant par exemple du côté opposé à celui s'approchant du sol en position repos (sans le contrepoids) peut permettre de ramener naturellement la position repos à une position proche de la position relevée.

Une tige entraînée par un vérin, un actionneur linéaire entraîné par un moteur ou tout autre système d'entraînement, peut également permettre de déplacer les éléments de saisie vers le haut de manière à augmenter la garde au sol.

Selon une autre variante, on peut utiliser le bras extensible de manière à rapprocher l'élément basculant du dispositif de poussée (ou inversement à rapprocher le dispositif de poussée de l'élément basculant). Sur la fin de course du déplacement longitudinal, le dispositif de poussée et l'élément basculant entrent en contact, le contact entraînant le relèvement de l'élément basculant. Une pièce intermédiaire, positionnée sur le dispositif de poussée ou sur l'élément basculant, peut faciliter le contact et le relèvement de l'élément basculant.

Avantageusement, une butée peut être positionnée sur le bâti ou sur le bras extensible pour assurer le contact de l'élément basculant en position relevée. La butée peut être en caoutchouc ou dans un matériau équivalent de manière à absorber les chocs. La butée a pour rôle d'assurer le maintien en position relevée de l'élément basculant.

L'invention concerne aussi un attelage comprenant un objet roulant et un système de propulsion électrique tel que décrit précédemment, l'objet roulant étant attelé au système de propulsion électrique par les moyens d'attelage. Un tel attelage permet de faciliter les manoeuvres de l'objet roulant, notamment dans un environnement restreint, ainsi que de faciliter les opérations d'attelage et de dés-attelage.

L'attelage tel que décrit est particulièrement adapté aux objets roulants comprenant au moins une roue non orientable (de préférence deux roues non orientables) tel qu'un fauteuil roulant dont les roues arrières sont non orientables. En effet, le système de propulsion permet aisément la saisie et la levée d'au moins une roue non orientable de l'objet roulant grâce au dispositif de poussée en vis-à-vis de l'élément basculant et grâce au bras extensible sur lequel est monté le dispositif de poussée ou l'élément basculant.

L'invention concerne encore un procédé pour atteler un objet roulant au système de propulsion électrique décrit précédemment. Ce procédé comprend notamment les étapes suivantes :
a) on déplace le système de propulsion électrique de manière à l'approcher d'au moins une roue de l'objet roulant,
b) on allonge le bras extensible de manière à permettre le positionnement de la roue de l'objet roulant entre l'élément basculant et le dispositif de poussée. Par exemple, si l'élément basculant et le dispositif de poussée sont positionnés sensiblement au niveau de l'altitude de l'axe de rotation de la roue, on peut allonger le bras extensible de manière à ce que l'espace entre l'élément basculant et le dispositif de poussée soit supérieur au diamètre de la roue à saisir. Lorsque l'élément basculant et/ou le dispositif de poussée sont positionnés à une altitude plus basse que l'axe de rotation de la roue (donc plus près du sol), la distance entre l'élément basculant et le dispositif de poussée peut être inférieure au diamètre de la roue à saisir mais doit toujours permettre la mise en place de la roue de l'objet roulant entre l'élément basculant et le dispositif de poussée ;
c) on déplace le système de propulsion électrique de manière à ce que la roue de l'objet roulant soit positionnée entre l'élément basculant et le dispositif de poussée, prête à être saisie et levée,
d) on raccourcit le bras extensible de manière à ce que le dispositif de poussée ou l'élément basculant vienne en contact avec la roue de l'objet roulant,
e) on continue le raccourcissement du bras extensible de manière à ce que le dispositif de poussée pousse la roue de l'objet roulant dans l'élément basculant, ce qui induit simultanément la levée de la roue de l'objet roulant.

Selon une mise en oeuvre avantageuse de l'invention, on peut simultanément prendre et saisir deux roues de l'objet roulant, par exemple deux roues non orientables de l'objet roulant, telles que les roues arrières d'un fauteuil roulant. Pour se faire, le système de propulsion comprend avantageusement deux moyens de préhension et de levage combinés et simultanés, mobiles en translation transversale l'un par rapport à l'autre, chaque moyen de préhension et de levage combinés et simultanés étant dédié à une roue distincte de l'objet roulant. Ainsi, le procédé pour atteler un objet roulant au système de propulsion électrique peut comprendre les étapes suivantes :
a) on déplace le système de propulsion électrique de manière à l'approcher de deux roues à saisir de l'objet roulant,
b) on déplace transversalement au moins un des deux moyens de préhension et de levage combinés et simultanés par rapport à l'autre des deux moyens de préhension et de levage combinés et simultanés,
c) on allonge le bras extensible de chaque moyen de préhension et de levage combinés et simultanés de manière à ce que l'écartement entre l'élément basculant et le dispositif de poussée laisse passer une roue distincte de l'objet roulant. Par exemple, l'espace entre l'élément basculant et le dispositif de poussée peut être supérieur au diamètre de la roue de l'objet roulant lorsque le dispositif de poussée et l'élément basculant sont positionnés au niveau de l'altitude de l'axe de rotation de la roue de l'objet roulant. S'ils sont positionnés à une altitude inférieure, plus près du sol, l'écartement entre l'élément basculant et le dispositif de poussée peut être inférieur au diamètre de la roue de l'objet roulant pour permettre le positionnement de la roue de l'objet roulant entre l'élément basculant et le dispositif de poussée. L'étape c) peut être réalisée avant, après ou simultanément avec l'étape b).
d) on déplace transversalement au moins un des deux moyens de préhension et de levage combinés et simultanés par rapport à l'autre des deux moyens de préhension et de levage combinés et simultanés, en sens opposé de celui de l'étape b) jusqu'à ce que chaque roue de l'objet roulant soit positionnée entre un dispositif de poussée et un élément basculant.
e) on raccourcit les bras extensibles pour pousser chaque roue de l'objet roulant dans chaque élément basculant par le dispositif de poussée, ce qui induit simultanément la levée de la roue de l'objet roulant.

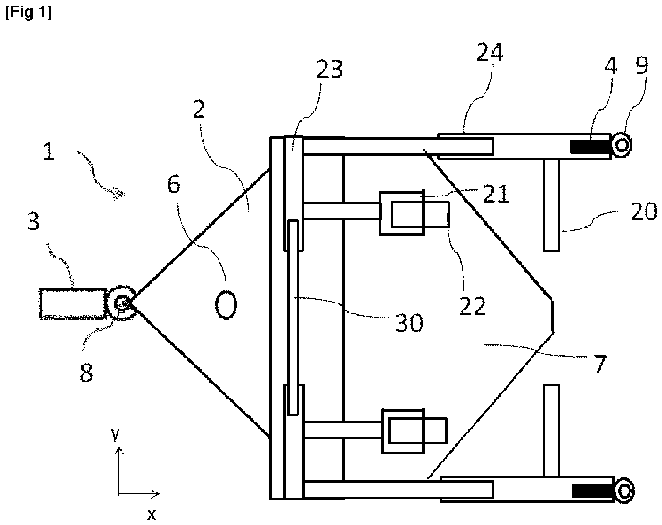

La figure 1 illustre, schématiquement et de manière non limitative, un système de propulsion électrique 1 selon un mode de réalisation de l'invention. La figure 1 est une vue de dessus du système de propulsion électrique 1. Le système de propulsion électrique 1 comprend un châssis 2. L'axe x correspond à l'axe longitudinal du châssis 2 et à la direction principale de déplacement du système de propulsion 1, et l'axe y correspond à l'axe latéral du châssis 2 (l'axe z non représenté est vertical). Le châssis 2 supporte, à l'une des extrémités longitudinales du système de propulsion électrique 1, une roue 3 (alternativement le châssis 2 peut supporter deux roues 3), qui est une roue entraînée par une machine électrique (non représentée). La roue 3 est orientable par rapport au châssis 2, autour d'un axe vertical 8. A l'autre extrémité longitudinale du système de propulsion électrique 1, le système de propulsion électrique comprend deux roues 4, qui sont deux roues non entraînées par une machine électrique. Ces deux roues 4 sont des roues décentrées orientables autour d'axes verticaux 9. Le système de propulsion électrique 1 comprend en outre des moyens d'attelage.

Selon le mode de réalisation illustré, le moyen d'attelage comprend deux moyens de préhension et de levage combinés et simultanés. Chacun des moyens de préhension et de levage combinés et simultanés comprend un bâti 23 et un élément basculant 22, tel qu'un basculeur, connecté au bâti 23 par une liaison pivot d'axe transversal 21. Chaque moyen de préhension et de levage combinés et simultanés comprend également un dispositif de poussée 20 connecté à un bras extensible 24 dans la direction longitudinale. Le bras extensible 24 a donc une longueur variable dans la direction longitudinale. Une des extrémités de ce bras extensible 24 est fixée au bâti 23. Ainsi, le bras extensible 24 permet de raccourcir ou d'allonger la distance longitudinale entre l'élément basculant 22 et le dispositif de poussée 20 de manière à pouvoir positionner une roue de l'objet roulant entre ces deux pièces puis à pousser la roue dans l'élément basculant 22. Le bras extensible 24 peut notamment comprendre un vérin de manière à commander l'allongement ou le rétrécissement du bras extensible 24. Les roues non entraînées 4 sont montées par l'intermédiaire de l'axe vertical 9, au niveau de l'extrémité longitudinale opposée à l'extrémité reliée au bâti 23, de chacun des bras extensibles 24. Ainsi, la distance entre les roues non entraînées 4 et le châssis 2 peut varier. Le positionnement des roues non entraînées 4 sur le bras extensible 24 permet d'améliorer la reprise des efforts une fois l'objet roulant attelé au système de propulsion électrique 1.

De manière à assurer l'éloignement et le raccourcissement des bâtis 23 l'un par rapport à l'autre (et ainsi d'assurer l'éloignement transversal des éléments basculants entre eux et des dispositifs de poussée entre eux), les deux bâtis 23 sont reliés par une liaison glissière de direction transversale 30. Cette fonction peut par exemple être assurée par un vérin ou par une crémaillère. Le moyen d'attelage est placé, dans la direction x, entre la roue motorisée 3 et les roues décentrées orientables 4.

De plus, le système de propulsion électrique 1 comprend un guidon 6, par exemple sous la forme d'une tige équipée d'une poignée (non représentée).

En outre, le système de propulsion électrique 1 peut comporter une plateforme 7 de support (par exemple d'un utilisateur).

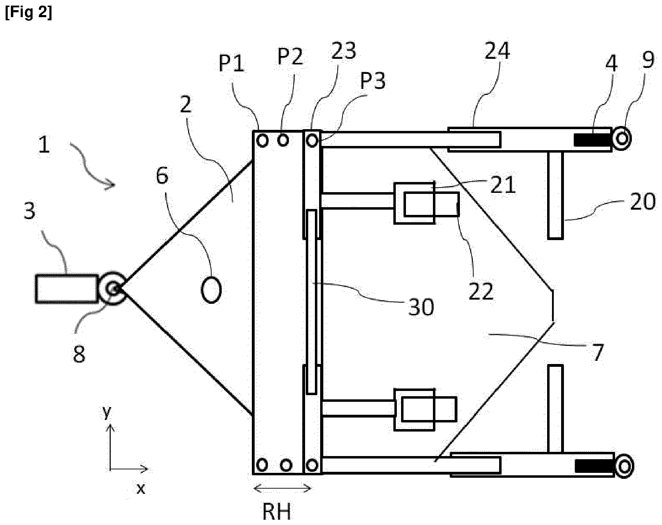

La figure 2 illustre, schématiquement et de manière non limitative, une variante de la figure 1. Les références identiques correspondent aux mêmes éléments et aux mêmes fonctionnements et ne seront donc pas redétaillées. La figure 2 se distingue de la figure 1 par le fait que les bâtis 23 sont réglables longitudinalement sur le châssis. En d'autres termes, la position longitudinale des bâtis 23 le long du châssis 2 peut être modifiée. On peut déplacer les bâtis 23 selon la direction RH. De manière schématique sur la figure, trois positions P1, P2 et P3 longitudinales sont représentées pour chaque bâti 23 sur le châssis 2. Ces trois positions P1, P2, P3 sont représentées par des orifices dans lesquels on peut mettre en place une goupille de manière à bloquer le bâti 23 dans la position longitudinale souhaitée. Alternativement, le réglage longitudinal pourrait être assuré de manière plus précise par un actionneur tel qu'un vérin.

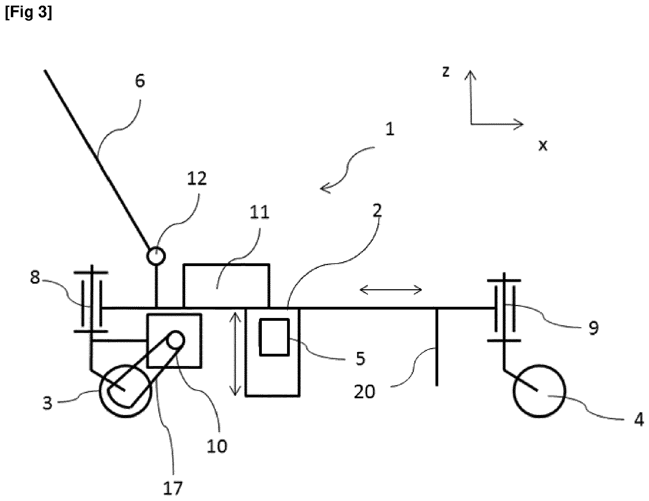

La figure 3 illustre, schématiquement et de manière non limitative, un système de propulsion électrique 1 selon une première variante de réalisation de l'invention. La figure 3 est une vue de côté du système de propulsion électrique 1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2, l'axe y (non représenté) correspond à l'axe transversal. Le châssis 2 supporte une roue 3, qui est une roue entraînée par une machine électrique 10 au moyen d'un entraînement 17, par exemple une courroie ou une chaîne (alternativement la machine électrique 10 peut être reliée directement à la roue 3). La roue 3 est orientable par rapport au châssis 2, autour d'un axe vertical 8. La machine électrique 10 peut être solidaire du pivot d'axe vertical 8 de la roue motorisée 3. A l'autre extrémité du système de propulsion, deux bras extensibles matérialisés par la double flèche horizontale, supportent chacun une roue non entraînée 4 par une machine électrique. Les roues 4 sont décentrées orientables par rapport aux bras extensibles autour d'axes verticaux 9. Les bras extensibles peuvent s'allonger ou se raccourcir selon la direction longitudinale x.

Le système de propulsion électrique 1 comprend en outre un moyen d'attelage 5. Le déplacement vertical du moyen d'attelage 5 est indiqué par une double flèche verticale. Ce déplacement vertical du moyen d'attelage permet de manière combinée et simultanée la préhension et le levage des roues de l'objet roulant, ce déplacement vertical étant simultané et combiné au déplacement transversal du moyen d'attelage 5 de manière à générer simultanément la préhension et le levage des roues de l'objet roulant. Le moyen d'attelage 5 est placé, dans la direction x, entre la roue motorisée 3 et les roues décentrées orientables 4.

Le moyen d'attelage comprend un dispositif de poussée 20, positionné et fixé sur le bras extensible.

De plus, le système de propulsion électrique 1 comprend un guidon 6 par exemple sous la forme d'une tige équipée d'une poignée (non représentée) reliée au châssis 2 par une articulation 12.

En outre, le système de propulsion électrique 1 comporte une batterie 11. La batterie 11 est placée sur le châssis 2 à proximité de la machine électrique 10 et de la roue motorisée 3.

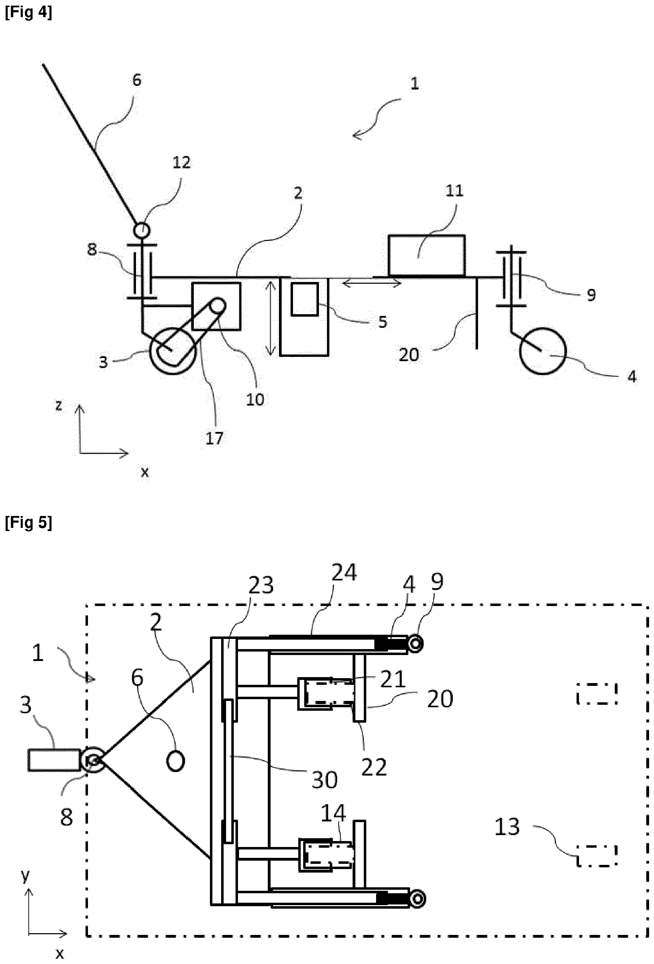

La figure 4 illustre, schématiquement et de manière non limitative, un système de propulsion électrique 1 selon une deuxième variante de réalisation de l'invention. La figure 4 est une vue de côté du système de propulsion électrique 1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2. Le châssis 2 supporte une roue 3, qui est une roue entraînée par une machine électrique 10 au moyen d'un entraînement 17, par exemple une courroie ou une chaîne. La roue 3 est orientable par rapport au châssis 2, autour d'un axe vertical 8. La machine électrique 10 peut être solidaire du pivot d'axe vertical 8 de la roue motorisée 3. A l'autre extrémité du système de propulsion électrique 1, deux bras extensibles le long de la direction longitudinale, matérialisés par la double flèche horizontale, supportent chacun une roue 4. Les roues 4 sont des roues non entraînées par une machine électrique. Les roues 4 sont décentrées orientables par rapport aux bras extensibles autour d'axes verticaux 9.

Le système de propulsion électrique 1 comprend en outre un moyen d'attelage 5. Le moyen d'attelage 5 comprend deux moyens de préhension et de levage combinés et simultanés, de part et d'autre du châssis 2. Le déplacement vertical des moyens de préhension et de levage combinés et simultanés est indiqué par la double flèche verticale. Ce déplacement vertical des moyens de préhension et de levage combinés et simultanés permet de manière combinée et simultanée la préhension et le levage des roues de l'objet roulant. Ce déplacement vertical est entraîné par le déplacement transversal des moyens de préhension et de levage combinés et simultanés. Le moyen d'attelage 5 est placé, dans la direction x, entre la roue motorisée 3 et les roues décentrées orientables 4.

Chaque moyen de préhension et de levage combinés et simultanés comprend un dispositif de poussée 20, positionné et fixé sur le bras extensible.

De plus, le système de propulsion 1 comprend un guidon 6, par exemple sous la forme d'une tige équipée d'une poignée (non représentée) reliée à l'axe d'orientation verticale 8 de la roue motorisée 3 au moyen d'une articulation 12.

En outre, le système de propulsion électrique 1 comporte une batterie 11. La batterie 11 est placée à proximité des roues non motorisées 4.

La figure 5 illustre, schématiquement et de manière non limitative, un système de propulsion électrique 1 selon un mode de réalisation de l'invention, attelé à un objet roulant matérialisé par le rectangle en traits mixtes. La figure 5 est une vue de dessus du système de propulsion électrique 1 attelé avec l'objet roulant. Le mode de réalisation de la figure 5 correspond sensiblement au mode de réalisation de la figure 1 (la plateforme 7 de la figure 1 n'est pas représentée de manière à ne pas alourdir le schéma). Les références identiques à celle de la figure 1 correspondent aux mêmes éléments et ne seront pas redétaillées. L'objet roulant peut être de tout type, notamment un fauteuil roulant, le système de propulsion électrique 1 étant particulièrement adapté à la préhension et à la levée de roues non orientables. L'objet roulant comprend deux roues 14, appelées roues arrières et qui peuvent avantageusement être des roues non orientables, et deux roues 13, appelées arbitrairement roues avant. Le système de propulsion électrique 1 comprend un châssis 2. L'axe x correspond à l'axe longitudinal du châssis 2 et à la direction principale de déplacement du système de propulsion 1, et l'axe y correspond à l'axe latéral du châssis 2. Le châssis 2 supporte une roue 3, qui est une roue entraînée par une machine électrique (non représentée). La roue 3 est orientable par rapport au châssis 2, autour d'un axe vertical 8. A l'autre extrémité du système de propulsion électrique 1, se trouvent deux bras extensibles 24 sur lesquels se trouvent deux roues 4 non entraînées par une machine électrique, ces roues 4 étant des roues décentrées et orientables autour d'axes verticaux 9. Le système de propulsion électrique 1 comprend en outre un moyen d'attelage comprenant deux moyens de préhension et de levage combinés et simultanés, chacun étant à proximité d'une extrémité transversale du système de propulsion électrique 1. Les moyens de préhension et de levage combinés et simultanés comprennent chacun un bâti 23 connecté au châssis 2 par une liaison glissière 30 d'axe transversal. Sur la figure 5, la glissière transversale 30 est commune aux deux bâtis 23. Sur chaque bâti 23, un élément basculant 22 est monté sur une liaison pivot d'axe transversal 21. De plus, un dispositif de poussée 20 est fixé sur chacun des bras extensibles 24. Le déplacement longitudinal de chaque bras extensible 24 entraînent donc le dispositif de poussée 20 vers l'élément basculant 22 (déplacement du bras extensible 24 dans la direction -x) ou au contraire dans la direction opposée (déplacement du bras extensible 24 dans la direction x).

Tel que représentées sur la figure 5, les roues arrières 14 ont été poussées par les dispositifs de poussée 20 vers les éléments basculants 22, entraînant ainsi la préhension et la levée des roues 14 de l'objet roulant.

Le système de propulsion électrique 1 comprend également un guidon 6 par exemple sous la forme d'une tige équipée d'une poignée (non représentée) articulée par rapport au châssis 2.

Pour le mode de réalisation de la figure 5, le moyen d'attelage, les roues non motorisées 4, et une majeure partie du système de propulsion électrique 1 sont situées en-dessous de l'objet roulant. Seuls la roue motorisée 3 et le guidon 6 peuvent dépasser de l'objet roulant 13 dans la direction longitudinale x du châssis 2.

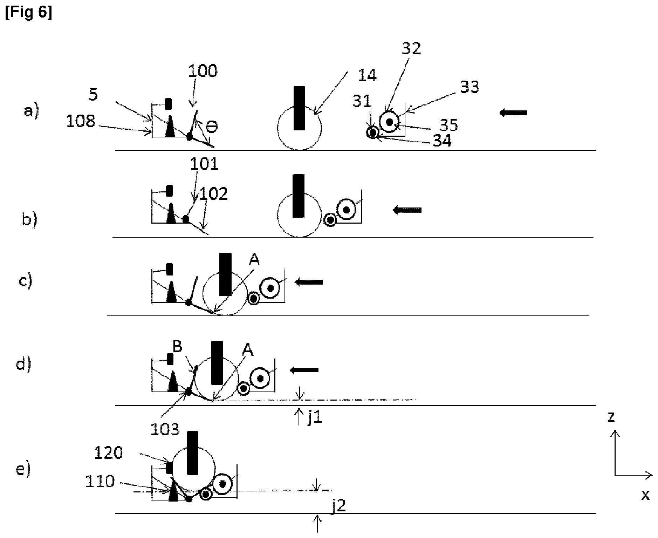

La figure 6 illustre, de manière schématique et non limitative, un premier mode de réalisation du moyen de préhension et de levage combinés et simultanés d'un système de propulsion selon l'invention.

Ce système de propulsion comprend un moyen d'attelage 5 avec un moyen de préhension et de levage combinés et simultanés. Ce moyen de préhension et de levage combinés et simultanés comprend des éléments de saisie comprenant un bâti 108 qui est une structure ne pouvant pas se déplacer verticalement. Sur ce bâti 108, est fixé un élément basculant (un basculeur par exemple) 100. Cet élément basculant 100 est relié au bâti 108 par une liaison pivot 103 d'axe transversal, orthogonale au plan de coupe, la direction x représentant la direction longitudinale et la direction z représentant la direction verticale. L'élément basculant 100 comprend deux parties 101 et 102 fixées rigidement l'une à l'autre et formant un angle *θ* non nul entre elles formant ainsi une pièce coudée. Le basculement de l'élément basculant 100 se fait par la seule gravité de l'élément basculant seul ou de l'élément basculant supportant un objet roulant. En d'autres termes, le basculement de l'élément basculant 100 n'est pas commandé par un moyen de commande (un vérin par exemple). La liaison pivot 103 est avantageusement positionnée au niveau de la liaison entre les deux parties 101 et 102 qui forment l'angle ouvert *θ*.

En vis-à-vis de l'élément basculant 100, se trouve un dispositif de poussée relié à un bras extensible (non représenté) dans la direction longitudinale x. Ce dispositif de poussée comprend un support 33 connecté au bras extensible. Par exemple, il peut être fixé au bras extensible. Ce support 33 supporte deux galets 31 et 32 qui peuvent pivoter respectivement autour de leurs axes transversaux 34 et 35, connectés au support 33. Le premier galet 31 a un diamètre inférieur au deuxième galet 32 et l'altitude de l'axe transversal 34 du premier galet 31 est inférieure à l'altitude de l'axe transversal 35 du deuxième galet 32. Ainsi, le premier galet 31 est conçu pour assurer le premier contact entre le dispositif de poussée et la roue 14 de l'objet roulant. Une fois que la roue 14 a commencé à être levée dans l'élément basculant 100, la roue 14 vient en contact du deuxième galet 32. Comme celui-ci a un diamètre plus grand et une altitude plus haute, il permet d'améliorer le maintien en position de la roue 14 de l'objet roulant dans l'élément basculant 100 en fonctionnement. En d'autres termes, le deuxième galet 32 constitue un meilleur obstacle que le premier galet 31 pour maintenir l'attelage de l'objet roulant dans le système de propulsion électrique.

La figure 6 illustre par cinq schémas a), b), c), d) et e) les différentes étapes pour l'accostage, la préhension et le levage d'au moins une roue de l'objet roulant.

Lors de l'étape a), la roue 14 de l'objet roulant n'est en contact ni avec l'élément basculant 100, ni avec le dispositif de poussée du moyen de préhension et de levage combinés et simultanés. Elle est notamment à distance de la partie 102 de l'élément basculant 100 et du premier galet 31 du dispositif de poussée. La partie 102 est à faible distance du sol pour faciliter la préhension et le levage des roues.

Les flèches noires représentent le déplacement appliqué au dispositif de poussée grâce au bras extensible non représenté, en direction de l'élément basculant.

Lors de l'étape b), le dispositif de poussée entre en contact avec la roue 14 de l'objet roulant. En effet, le premier galet 31 est en contact avec la roue 14.

En poursuivant le déplacement longitudinal du dispositif de poussée en direction de l'élément basculant 100, le dispositif de poussée (le premier galet 31) pousse la roue 14 de l'objet roulant vers l'élément basculant.

A l'étape c), la roue 14 de l'objet roulant, poussée par le dispositif de poussée, entre en contact au point A avec l'élément basculant 100. Une fois le contact établi au point A entre l'élément basculant 100 et la roue 14 de l'objet roulant, l'élément basculant 100 bascule jusqu'à ce qu'un deuxième contact soit établi entre la roue 14 de l'objet roulant et l'élément basculant 100 au point B tel qu'on peut le voir sur le schéma d). L'ensemble élément basculant 100 et roue 14 de l'objet roulant peut alors basculer, ce qui permet simultanément de saisir et lever la roue 14 de l'objet roulant. La poursuite du déplacement longitudinal du bras extensible entraîne le basculement de l'élément basculant 100 et de la roue 14 de l'objet roulant. Un jeu j1 que l'on peut voir sur le schéma d) apparaît alors entre le bas des roues 14 de l'objet roulant et le sol, matérialisé sur les différents schémas par le trait horizontal continu. On observe également que l'élément basculant 100 a légèrement tourné autour de sa liaison pivot 103, la roue étant en contact de la partie de support de roue 102 au point de contact A et de l'autre partie 101 de l'élément basculant 100 au point de contact B.

En poursuivant le déplacement longitudinal du dispositif de poussée, l'élément basculant 100 est entraîné en rotation autour de sa liaison pivot 103 par appui de chaque roue 14 de l'objet roulant dans l'élément basculant 100. Les moyens de préhension et de levage combinés et simultanés continuent à saisir et à lever les roues 14 de l'objet roulant jusqu'à la position finale représentée sur le schéma e) où le jeu j2 entre le bas de chaque roue 14 de l'objet roulant et le sol est maximal, avec j2 supérieur à j1. A cette position finale, chaque roue 14 de l'objet roulant est immobilisée dans le moyen d'attelage 5 et est en appui, dans la direction longitudinale sur des premières butées 120 positionnées sur le bâti 108. De plus, une pièce de maintien 110 permet de maintien en position de l'élément basculant 100, dans cette position, dite position relevée, contre le bâti 108. Cette pièce de maintien 110, également positionnée sur le bâti 108 est située sous l'élément basculant 100 en position relevée. La pièce de maintien 110 permet de reprendre les efforts liés au poids de l'objet roulant sur les moyens de préhension et de levage combinés et simultanés, permettant de limiter la fatigue des éléments basculants 100.

La pièce de maintien 110 et/ou les premières butées 120 sont de préférence en matériau souple, comme du caoutchouc, de manière à éviter l'hyperstatisme d'une part et de manière à s'adapter à différents diamètres de roues d'autre part.

On observe également que sur le schéma e), dans la position finale, la roue 14 de l'objet roulant est en contact du deuxième galet 32 et on peut observer également que le premier galet 31 ne permettrait pas s'assurer le maintien de la roue 14 dans l'élément basculant de par son trop faible diamètre et de par son trop bas positionnement par rapport à la position finale de la roue 14 de l'objet roulant.

Ainsi, en imposant un seul mouvement de translation longitudinal (flèche noire), on met en oeuvre de manière combinée et simultanée la préhension et le levage de la roue 14 de l'objet roulant.

La figure 6 illustre un procédé et un système dans lequel le dispositif de poussée est entraîné en translation par le bras extensible mais il est évident que le système pourrait être inversé, l'élément basculant pouvant alors être entraîné par le bras extensible et le dispositif de poussée étant alors fixe sur le bâti.

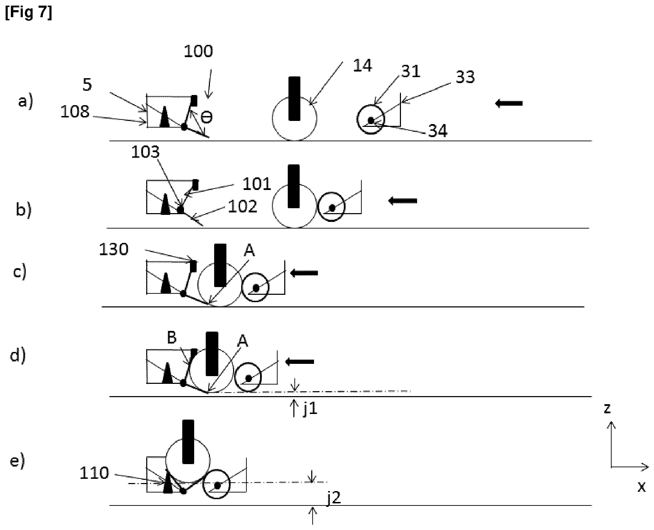

La figure 7 illustre, de manière schématique et non limitative, un autre mode de réalisation d'un moyen de préhension et de levage combinés et simultanés d'un système de propulsion selon l'invention.

Sur cette figure, le système de propulsion comprend un moyen d'attelage 5 avec un moyen de préhension et de levage combinés et simultanés. Ce moyen de préhension et de levage combinés et simultanés comprend des éléments de saisie comprenant un bâti 108 qui est une structure ne pouvant pas se déplacer verticalement. Un élément basculant 100 est relié au bâti 108 par une liaison pivot 103 d'axe transversal, orthogonale au plan de coupe, la direction x représentant la direction longitudinale et la direction z représentant la direction verticale. L'élément basculant 100, un basculeur par exemple, comprend deux parties 101 et 102 fixées rigidement l'une à l'autre et formant un angle *θ* ouvert non nul entre elles formant une pièce coudée. La liaison pivot 103 est avantageusement positionnée au niveau de la liaison entre les deux parties 101 et 102.

Un dispositif de limitation du débattement angulaire 130 est utilisé pour limiter le débattement angulaire de l'élément basculant 100. Il permet ainsi de prédéfinir la distance entre le bas de l'élément basculant et le sol, en position repos.

De plus, le moyen de préhension et de levage combiné et simultané comprend un dispositif de poussée fixé sur un bras extensible (non représenté) dans la direction longitudinale x. Le dispositif de poussée comprend notamment un support 33 connecté au bras extensible de manière à ce que le déplacement longitudinal du bras extensible soit transmis au support 33. Un galet 31 est monté sur une liaison pivot d'axe transversal 34, elle-même montée sur le support 33.

La figure 7 illustre par cinq schémas a), b), c), d) et e) les différentes étapes pour l'accostage, la préhension et le levage d'au moins une roue de l'objet roulant.

Lors de l'étape a), la roue 14 de l'objet roulant n'est en contact ni avec l'élément basculant 100 ni avec le galet 31 du dispositif de poussée des moyens de préhension et de levage combinés et simultanés. Elle est notamment à distance de la partie 102 du premier élément basculant 100 et du galet 31. De plus, la partie 102 est à faible distance du sol pour faciliter la préhension et le levage de la roue de l'objet roulant.

Les flèches noires représentent le déplacement longitudinal appliqué au dispositif de poussée par l'intermédiaire du bras extensible, en direction de l'élément basculant (selon la direction -x).

Lors de l'étape b), le galet 31 du dispositif de poussée entre en contact avec la roue 14 de l'objet roulant.

En poursuivant le déplacement longitudinal du bras extensible, le dispositif de poussée pousse alors la roue 14 de l'objet roulant en direction de l'élément basculant.

Sur le schéma c), la roue 14 de l'objet roulant entre en contact au point A avec l'élément basculant 100. Le déplacement longitudinal du bras extensible entraîne alors le basculement de la roue autour du point A jusqu'à venir en contact avec le point B de la partie 101 de l'élément basculant 100. Un jeu j1, comme on peut voir sur le schéma c), apparaît alors entre le bas des roues 14 de l'objet roulant et le sol, matérialisé sur les différents schémas par le trait horizontal continu. On observe également que chaque premier élément basculant 100 peut avoir légèrement tourné autour de sa liaison pivot 103, la roue étant en contact de la partie de support de roue 102 au point de contact A et de l'autre partie 101 de chaque premier élément basculant 100 au point de contact B. Autrement dit, la partie 101 de l'élément basculant n'est plus en contact avec le dispositif de limitation du débattement angulaire 130.

Puis, le moyen de préhension et de levage combinés et simultanés continue à saisir et à lever la roue 14 de l'objet roulant jusqu'à la position finale représentée sur le schéma e) où le jeu j2 entre le bas de chaque roue 14 de l'objet roulant et le sol est maximal, avec j2 supérieur à j1. A cette position finale, chaque roue 14 de l'objet roulant est immobilisée dans le moyen d'attelage 5 et est en appui, dans la direction longitudinale contre le premier galet 31.

Ainsi, en imposant un seul mouvement de translation longitudinal (flèche noire), on met en œuvre de manière combinée et simultanée la préhension et le levage de la roue 14 de l'objet roulant.

La figure 7 illustre un procédé et un système dans lequel le dispositif de poussée est entraîné en translation par le bras extensible mais il est évident que le système pourrait être inversé, l'élément basculant pouvant alors être entraîné par le bras extensible et le dispositif de poussée étant alors fixe sur le bâti.

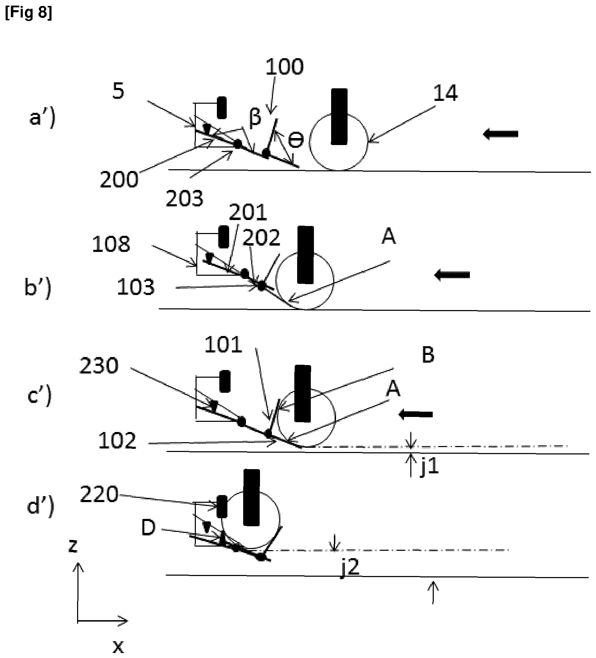

La figure 8 illustre, de manière schématique et non limitative, un autre mode de réalisation d'un moyen de préhension et de levage combinés et simultanés d'un système de propulsion selon l'invention.

Ce système de propulsion comprend un moyen d'attelage 5 avec un moyen de préhension et de levage combinés et simultanés. Ce moyen de préhension et de levage combinés et simultanés comprend des éléments de saisie comprenant un bâti 108 qui est une structure ne pouvant pas se déplacer verticalement. Sur ce bâti 108, est fixé un deuxième élément basculant (un basculeur par exemple) 200. Ce deuxième élément basculant 200 est relié au bâti 108 par une liaison pivot 203 d'axe transversal, orthogonale au plan de coupe, la direction x représentant la direction longitudinale et la direction z représentant la direction verticale. L'élément basculant 200 comprend deux parties 201 et 202 fixées rigidement l'une à l'autre et formant un angle ouvert non nul entre elles. La liaison pivot 203 est avantageusement positionnée au niveau de la liaison entre les deux parties 201 et 202.

Ce deuxième élément basculant 200 est lui-même relié à un premier élément basculant 100 par un axe sensiblement horizontal 103 formant une liaison pivot entre les premier et deuxième éléments basculants 100 et 200. L'axe sensiblement horizontal 103 est dirigé selon la direction transversale (orthogonale au plan de coupe). Cet axe horizontal est donc parallèle à la liaison pivot 203. L'axe horizontal 103 est avantageusement positionné au niveau de la liaison entre les deux parties 101 et 102 reliées rigidement entre elles et formant un angle ouvert non nul, les deux parties 101 et 102 formant l'élément basculant 100, un basculeur par exemple. La multiplication des éléments basculants permet de réduire l'effort nécessaire pour initier la préhension et le levage des roues 14 de l'objet roulant.

Sur la figure 8, le dispositif de poussée n'est pas représenté. Il peut correspondre au dispositif de poussée de la figure 6 ou de la figure 7 par exemple. Seules les flèches noires représentent le déplacement longitudinal du dispositif de poussée entraînant la roue 14 de l'objet roulant vers l'élément basculant 100.

La figure 8 illustre par quatre schémas a'), b'), c') et d') les différentes étapes pour l'accostage, la préhension et le levage d'au moins une roue de l'objet roulant.

Lors de l'étape a'), la roue 14 de l'objet roulant n'est pas encore en contact de l'élément basculant 100. Elle est notamment à distance de la partie 102 du premier élément basculant 100, cette partie 102 étant à faible distance du sol pour faciliter la préhension et le levage des roues.

Les flèches noires représentent le déplacement appliqué au dispositif de poussée.

Lors de l'étape b'), la roue 14 de l'objet roulant entre en contact au point de contact A avec l'élément basculant. L'élément basculant 100 peut alors pivoter jusqu'à ce qu'un deuxième contact soit établi au point B entre l'élément basculant 100 et la roue 14 de l'objet roulant. Après avoir établi le contact aux points A et B, le déplacement longitudinal du dispositif de poussée vers l'élément basculant 100 entraîne le basculement de l'ensemble roue 14 de l'objet roulant et élément basculant 100 et ainsi entraîne la saisie et la levée de la roue 14 de l'objet roulant comme le montre le schéma c'). Un jeu j1 apparaît entre le bas des roues 14 de l'objet roulant et le sol, matérialisé sur les différents schémas par le trait horizontal continu.

En poursuivant le déplacement longitudinal du dispositif de poussée, le premier élément basculant 100 est entraîné en rotation autour de sa liaison pivot 103 par appui de chaque roue 14 de l'objet roulant dans chaque premier élément basculant 100, chaque premier élément basculant 100 entraînant le deuxième élément basculant 200 en rotation autour de sa liaison pivot 203. Des butées non représentées peuvent être prévues entre la roue et l'élément basculant 200 ou entre l'élément basculant 100 et l'élément basculant 200 pour permettre l'entraînement en rotation de l'élément basculant 200. Les moyens de préhension et de levage combinés et simultanés continuent à saisir et à lever les roues 14 de l'objet roulant jusqu'à la position finale représentée sur le schéma d') où le jeu j2 entre le bas de chaque roue 14 de l'objet roulant et le sol est maximal, avec j2 supérieur à j1. A cette position finale, chaque roue 14 de l'objet roulant est immobilisée dans le moyen d'attelage 5 et est en appui, dans la direction longitudinale sur le dispositif de poussée (sur un galet par exemple).

De plus, un deuxième dispositif de limitation de débattement angulaire 230 positionné sur le bâti 108 empêche un déplacement angulaire de la partie 201 du deuxième élément basculant 200 au-delà de ce dispositif de limitation de débattement angulaire 230. Sur les schémas a'), b') et c'), la partie 201 du deuxième élément basculant 200 est en contact du dispositif de débattement angulaire 230 qui joue donc son rôle de limitation de la rotation du deuxième élément basculant 200 autour de sa liaison pivot 203. Sur le schéma d'), la partie 201 du deuxième élément basculant 200 n'est plus en contact du dispositif de limitation de débattement angulaire 230.

Une telle configuration permet de limiter les variations d'efforts pour saisir et lever la roue de l'objet roulant juste après son contact au point A et ce jusqu'à ce que la roue vienne au contact du point B.

Ainsi, en imposant un seul mouvement de translation longitudinal (flèche noire), on met en oeuvre de manière combinée et simultanée la préhension et le levage de la roue de l'objet roulant.

La figure 8 illustre un procédé et un système dans lequel le dispositif de poussée est entraîné en translation par le bras extensible mais il est évident que le système pourrait être inversé, l'élément basculant pouvant alors être entraîné par le bras extensible et le dispositif de poussée étant alors fixe sur le bâti.

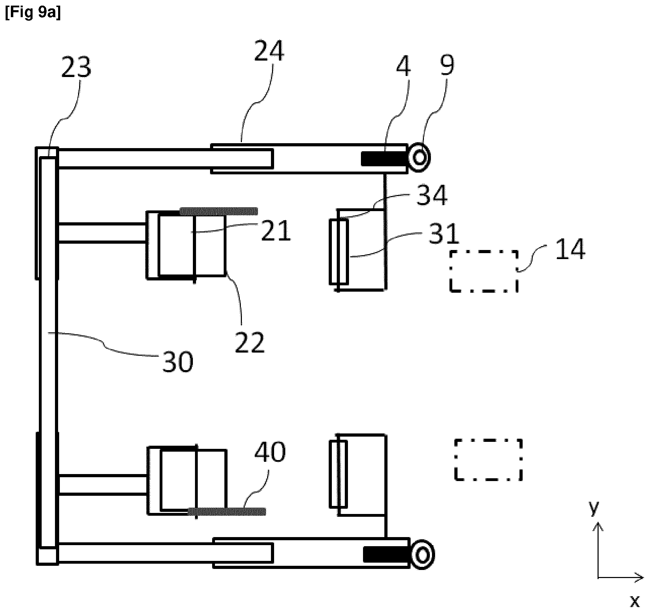

Les figures 9a à 9g illustrent, de manière schématique et non limitative, les différentes étapes pour saisir et lever deux roues d'un objet roulant à partir d'une variante d'un système de propulsion électrique de l'invention comprenant deux moyens de préhension et de levage combinés et simultanés. L'axe x correspond à l'axe longitudinal et l'axe y correspond à l'axe transversal.

Ce système de propulsion comprend un moyen d'attelage avec deux moyens de préhension et de levage combinés et simultanés. Chacun de ces moyens de préhension et de levage combinés et simultanés comprend un bâti 23 et un élément basculant 22 relié au bâti 23 par une liaison pivot d'axe transversal 21. Un dispositif de poussée est fixé sur un bras extensible 24 relié au bâti 23. De ce fait, la distance entre le dispositif de poussée et le bâti 23 peut être modifiée par allongement ou rétrécissement du bras extensible 24. Une roue non entraînée 4 décentrée orientable autour d'un axe vertical 9 est positionnée à l'extrémité longitudinale du bras extensible opposée à l'extrémité longitudinale du bras extensible fixée au bâti 23.

Les deux bâtis 23 sont en liaison glissière d'axe transversal 30, de manière à éloigner transversalement les deux moyens de préhension et de levage combinés et simultanés l'un de l'autre. Autrement dit, la distance transversale entre les deux moyens de préhension et de levage combinés et simultanés peut varier par glissement de l'un et/ou l'autre des moyens de préhension et de levage combinés et simultanés le long de la glissière d'axe transversal 30. Cette (ou ces) translation(s) peut (ou peuvent) par exemple être actionnée(s) par un vérin hydraulique, électrique ou pneumatique.

Le dispositif de poussée comprend notamment un support fixé au bras extensible. Un galet 31 est connecté au support par une liaison pivot d'axe transversal 34.

En outre, une butée d'accostage 40 est fixée sur le bâti 23, à proximité d'une extrémité transversale de l'élément basculant 22 de chaque moyen de préhension et de levage combinés et simultanés. Alternativement, la butée d'accostage pourrait être fixée sur l'extrémité transversale de l'élément basculant.

La butée d'accostage 40 s'étend sensiblement dans la direction longitudinale en direction du dispositif de poussée en vis-à-vis de l'élément basculant 22 et est positionnée sur le côté externe au système de propulsion électrique. De ce fait, lorsque le moyen de préhension et de levage combinés et simultanés se déplace dans la direction transversale, la roue 14 de l'objet roulant vient en contact de la butée d'accostage 40. Une fois le contact établi, le déplacement transversal du moyen de préhension et de levage combinés et simultanés peut être arrêté.

La figure 9a représente un exemple de situation où le positionnement initial des moyens de préhension et de levage combinés et simultanés ne permet pas de positionner les roues 14 de l'objet roulant entre les éléments basculants 22 et le galet 31 du dispositif de poussée.

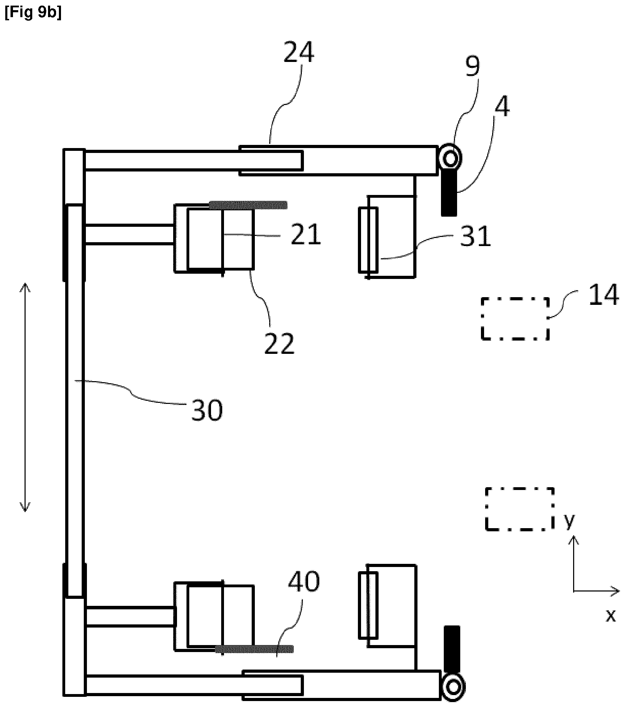

La figure 9b montre une première étape où on vient éloigner les deux moyens de préhension et de levage combinés et simultanés l'un de l'autre par l'intermédiaire de la glissière 30. L'éloignement est représenté par la double flèche transversale du schéma. Tel que représenté, l'éloignement entre les deux moyens de préhension et de levage combinés et simultanés permet de faire avancer le système de propulsion électrique en direction de l'objet roulant de manière à ce que les moyens de préhension et de levage combinés et simultanés soient positionnés chacun sur un côté latéral externe de l'objet roulant.

Le déplacement transversal par allongement de la glissière 30 entraîne les roues 4 du système de propulsion électrique vers l'intérieur du système de propulsion électrique. En effet, les roues 4 étant auto-orientables, le déplacement transversal de la glissière 30 entraîne les roues 4 dans la direction transversale et dans le sens opposé au déplacement de la glissière 30.

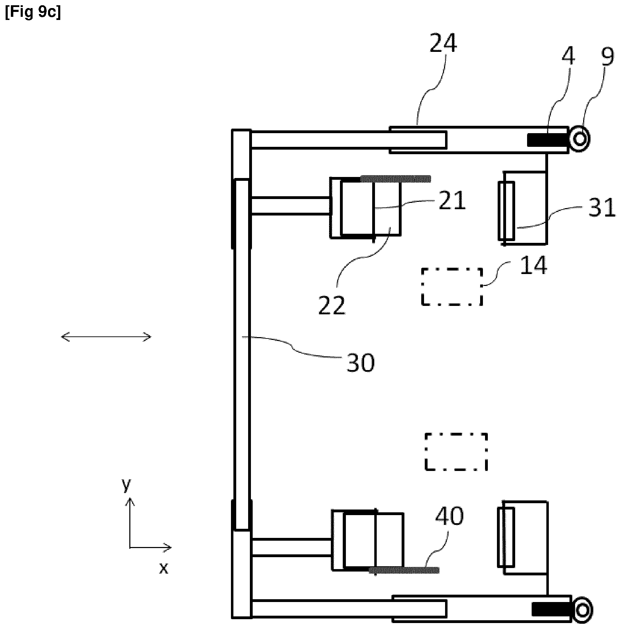

La figure 9c montre le positionnement relatif des roues 14 de l'objet roulant et des moyens de préhension et de levage combinés et simultanés une fois sur le système de propulsion électrique avancé dans la direction longitudinale comme représenté par la double flèche horizontale.

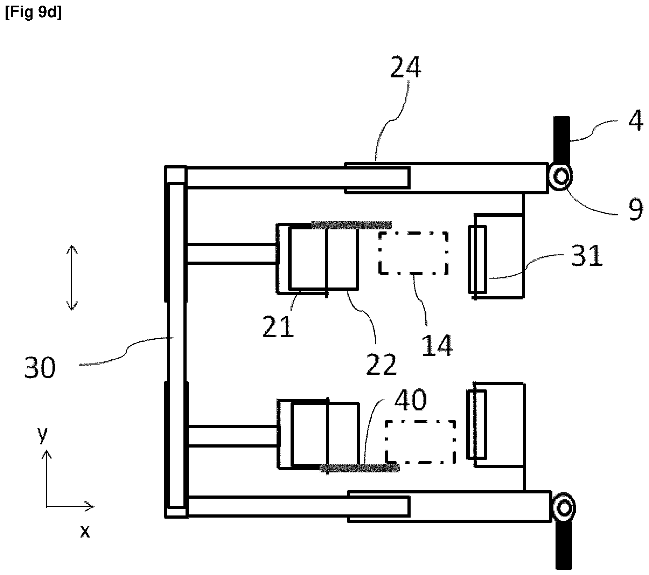

Sur la figure 9d, les deux moyens de préhension et de levage combinés et simultanés sont rapprochés l'un de l'autre par la glissière d'axe transversal 30, jusqu'à ce que chacune des roues 14 entre en contact avec une butée d'accostage 40. Une fois le contact établi, la translation transversale des moyens de préhension et de levage combinés et simultanés est arrêtée.

Le déplacement transversal par diminution de la longueur de la glissière 30 entraîne les roues 4 du système de propulsion électrique vers l'extérieur du système de propulsion électrique. En effet, les roues 4 étant auto-orientables, le déplacement transversal de la glissière 30 entraîne les roues 4 dans la direction transversale et dans le sens opposé au déplacement de la glissière 30.

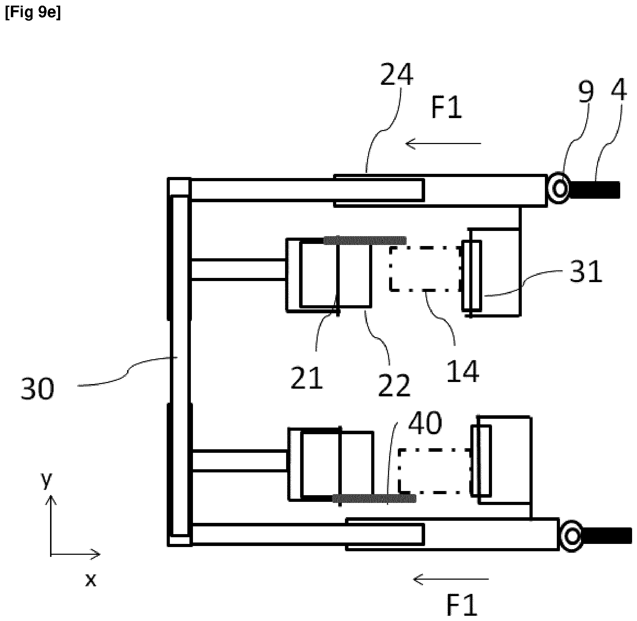

Sur la figure 9e, le bras extensible 24 se raccourcit. En effet, le bras extensible 24 suit une translation longitudinale F1 en direction du bâti 23. De ce fait, le déplacement du bras extensible entraîne le dispositif de poussée et notamment le galet 31.

Ce déplacement longitudinal F1 entraîne le contact entre chacune des roues 14 et un galet 31 du dispositif de poussée. Une fois le contact établi, la poursuite du déplacement longitudinal F1 entraîne les roues 14 de l'objet roulant en direction des éléments basculants 22. Ce déplacement entraîne également les roues 4 du système de propulsion électrique dans la direction longitudinale.

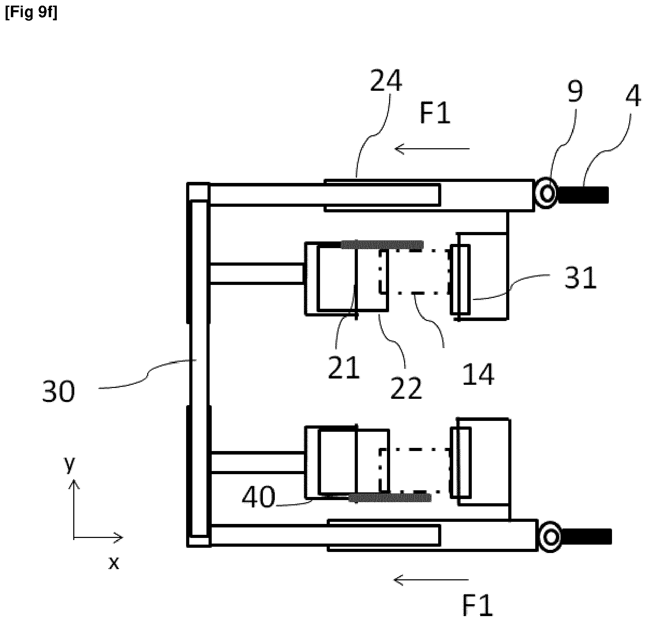

Sur la figure 9f, on observe que chaque roue 14 entre en contact avec l'élément basculant 22.

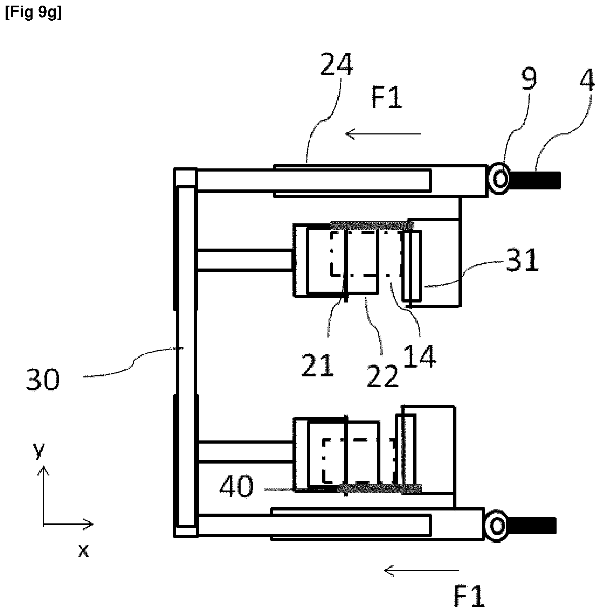

En poursuivant le déplacement longitudinal F1 du bras extensible 24, les roues 14 arrivent à leurs positions finales dans l'élément basculant en restant en contact avec le galet 31 du dispositif de poussée. Ces positions finales sont représentées sur la figure 9g. L'attelage de l'objet roulant dans le système de propulsion électrique est alors finalisé. L'objet roulant peut alors être transporté aisément grâce au système de propulsion électrique.

La diminution de la longueur du bras extensible 24 entraîne l'orientation des roues 4 du système de propulsion électrique dans la direction longitudinale opposée au bras extensible 24, c'est-à-dire dans le sens opposé au déplacement du bras extensible 24.

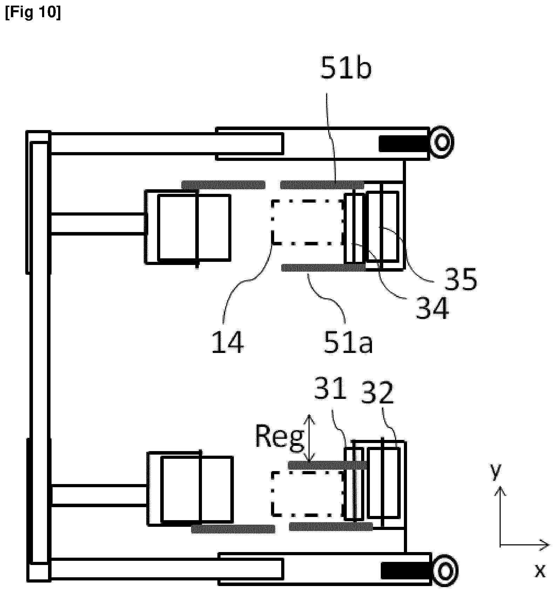

La figure 10 représente, schématiquement et de manière non limitative, une variante du système représenté sur les figures 9a à 9g. Dans cette variante, le dispositif de poussée comprend deux pièces guides 51a et 51b positionnées de part et d'autre du galet 31. Selon une variante, ces deux pièces guides 51a et 51b pourraient être positionnées de part et d'autre de l'élément basculant. L'axe x correspond à l'axe longitudinal et l'axe y correspond à l'axe transversal.

Ces deux pièces guides 51a et 51b s'étendent sensiblement dans la direction longitudinale en direction du bâti 23. Ces deux pièces guides 51a et 51b permettent d'éviter le pivotement de roues 14 orientables de l'objet roulant lors du déplacement longitudinal du bras extensible en direction des éléments basculants. Autrement dit, ces deux pièces guides 51a et 51b maintiennent la roue 14 sensiblement dans la direction longitudinale.

Par ailleurs, l'une au moins des deux pièces guides 51a et 51b peut être déplaçable le long de la direction transversale Reg de manière à pouvoir adapter l'écartement entre les deux pièces guides à la largeur de la roue 14 de l'objet roulant.

De cette manière, l'orientation des roues 14, lorsqu'elles sont orientables, peut être maintenue avec une bonne précision dans la direction longitudinale.

Par ailleurs, le dispositif de poussée comprend, comparativement au système des figures 9a à 9g, un deuxième galet 32 connecté au support par une liaison pivot d'axe transversal 35. Les deux axes transversaux 34 et 35 sont donc parallèles entre eux. L'axe transversal 35 du deuxième galet 32 est à une altitude au-dessus du sol supérieure à l'altitude au-dessus du sol de l'axe transversal 34 du premier galet 31. En outre, le diamètre du deuxième galet 32 peut être supérieur au diamètre du premier galet 31. Cette configuration à double galet permet une plus grande adaptabilité du système à différents diamètres de roues 14 d'objet roulant, le deuxième galet 32 permettant notamment un meilleur obstacle pour maintenir l'ensemble attelé en fonctionnement, le premier galet 31 servant à pousser initialement la roue et à faciliter le contact et le début de levée de la roue 14 de l'objet roulant dans l'élément basculant 22.

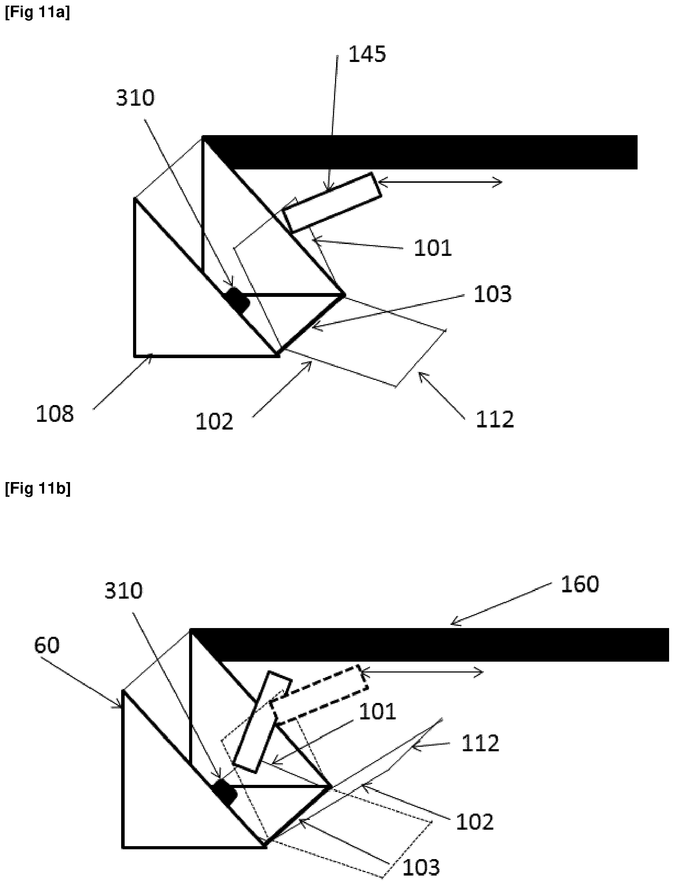

Les figures 11a et 11b illustrent, de manière schématique et non limitative, un mode de réalisation d'un dispositif de relevage d'un moyen de préhension et de levage combinés et simultanés selon l'invention.

Sur ces figures, le moyen de préhension et de levage combinés et simultanés comprend un bâti 108. Sur ce bâti 108, sur lequel est positionné un élément basculant en deux parties 101 et 102, fixées rigidement entre elles et formant un angle ouvert non nul. L'élément basculant pivote autour d'une liaison pivot d'axe horizontal 103, relié au bâti 108, permettant la rotation de l'élément basculant par rapport au bâti 108. L'élément basculant permet de réaliser simultanément la préhension et le levage de la roue de l'objet roulant. La liaison pivot 103 est avantageusement positionnée au niveau de la liaison entre les deux parties 101 et 102. De plus, une pièce de maintien 310 permet de soutenir l'élément basculant, lorsqu'il supporte la roue de l'objet roulant de manière à améliorer la reprise des efforts et à limiter la fatigue de l'élément basculant. Selon une variante, la pièce de maintien 310 peut soutenir la roue de l'objet roulant.

En outre, une came 145 est fixée rigidement sur l'élément basculant. Sur l'extrémité de la came 145 qui n'est pas fixée à l'élément basculant, un déplacement dans la direction longitudinale peut être appliqué par exemple par une tige ou un vérin. Ce déplacement est représenté par la double flèche. Lorsqu'on déplace la came 145 en direction du bâti 108, la came 145 entraîne le relèvement de l'élément basculant. La garde au sol est alors augmentée. Au contraire, un déplacement de la came 145 en direction opposée au bâti 108 entraîne l'abaissement de l'élément basculant au plus près du sol, facilitant ainsi la préhension et le levage des roues de l'objet roulant. Le déplacement de la came 145 peut être avantageusement lié à un actionneur qui permet simultanément le relevage des éléments basculants de deux moyens de préhension et de levage combinés et simultanés opposés.

La came 145 peut être entraînée par exemple par le dispositif de poussée, lui-même entraîné par le bras extensible.

Alternativement ou en combinaison, un système à contrepoids pourrait être utilisé pour le relevage des éléments basculants.

La figure 11a représente l'élément basculant en position repos prêt à saisir et lever une roue de l'objet roulant.

Sur la figure 11b, la position repos est représentée en pointillés et la position relevée de l'élément basculant est représentée en trait continu. On observe ainsi que la partie 112 de support de la roue, qui est initialement le point le plus bas, est relevée et se trouve donc, en position relevée, à une altitude plus élevée que celle de la position repos.

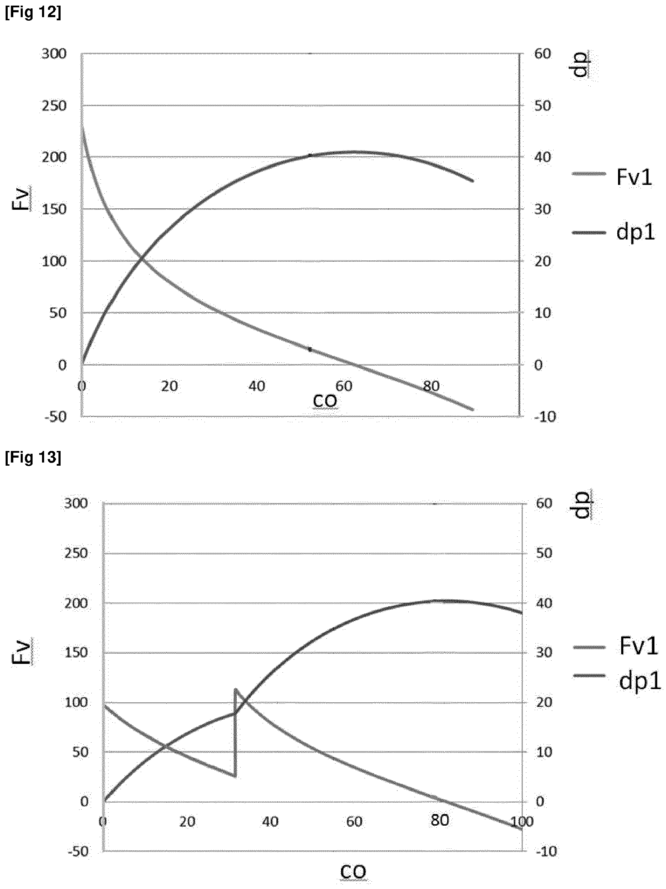

Les figures 12 et 13 représentent l'évolution de l'effort appliqué Fv par le ou les vérins au cours de la course co (dans la direction transversale) appliquée au moyen de préhension et de levage combinés et simultanés, le point initial de la course co correspondant au premier contact entre la roue de l'objet roulant et le premier élément basculant. La course co s'effectue dans la direction longitudinale du système de propulsion.

Ces figures montrent aussi l'élévation de la roue dp par rapport au sol au cours de la course co.

La courbe Fv1 montre l'évolution de l'effort appliqué et la courbe dp1 celle de l'élévation de la roue de l'objet roulant.

Les figures 12 et 13 représentent l'évolution de l'effort appliqué Fv1 et l'évolution de l'élévation de la roue de l'objet roulant pour deux modes de réalisation de moyens de préhension et de levage combinés et simultanés selon l'invention.

La figure 12 illustre le cas d'un système selon l'invention avec un seul élément basculant, la figure 13 illustre le cas d'un système selon l'invention avec un élément basculant et un dispositif de limitation du débattement angulaire de l'élément basculant. Le système de la figure 12 correspond au mode de réalisation de la figure 6, celui de la figure 13 au mode de réalisation de la figure 7.

Ces figures correspondent à la préhension et à la levée d'un objet roulant d'un poids d'environ 400 N soit sensiblement 100 N par roue (pour un objet roulant avec quatre roues). On observe que pour les deux systèmes, l'élévation de la roue est d'environ 40mm ce qui permet d'assurer une garde au sol suffisante, une fois le système attelé à l'objet roulant.

Par ailleurs, on observe que l'ajout du dispositif de limitation du débattement angulaire entre la figure 12 et la figure 13 permet de considérablement réduire l'effort maximal nécessaire (qui passe de plus de 200 N à moins de 120 N). Sur la figure 13, l'effort maximal correspond à l'instant où le basculeur perd le contact avec le dispositif de limitation du débattement angulaire. Sur la figure 12, l'effort maximal correspond au premier contact de la roue avec l'élément basculant.

Sur la figure 13, on observe une première partie où l'effort Fv1 diminue avant de brutalement remonter puis de diminuer à nouveau. Le moment de cette remontée brutale correspond au moment où l'élément perd le contact avec le dispositif de limitation du débattement angulaire, c'est-à-dire le moment où l'élément basculant commence à basculer. Un effet du même type pourrait être obtenu en remplaçant le dispositif de limitation du débattement angulaire par un deuxième élément basculant comme sur la figure 8.

Le système de propulsion de l'invention est notamment adapté à différents objets roulants, avec des écartements de roues différents, avec des diamètres de roues différents. Il permet donc une très grande variabilité d'utilisation. Le système de propulsion est notamment particulièrement adapté pour la préhension et le levage de roues non orientables d'un objet roulant, telles que les roues arrières d'un fauteuil roulant.

## Revendications

1. Système de propulsion électrique amovible (1) pour un objet roulant (13), ledit système de propulsion (1) comprenant un châssis (2) muni d'au moins une roue entrainée (3) par une machine électrique (10), au moins une roue non entraînée (4) et au moins un moyen d'attelage (5) dudit système de propulsion électrique (1) audit objet roulant (13), **caractérisé en ce que** ledit moyen d'attelage (5) comprend au moins un moyen de préhension et de levage combinés et simultanés d'au moins une roue (14) dudit objet roulant (13), et **en ce que** ledit moyen de préhension et de levage combinés et simultanés comprend un bâti (23, 108), au moins un bras extensible (24) dans une direction longitudinale connecté au bâti (23,108), au moins un élément basculant (22,100) et au moins un dispositif de poussée (20), l'élément basculant (22,100) et le dispositif de poussée (20) étant pour l'un connecté audit bras extensible (24) et pour l'autre connecté au bâti (23, 108), ledit dispositif de poussée (20) étant apte à pousser au moins une roue (14) de l'objet roulant (13) selon ladite direction longitudinale (x) dans ledit au moins un élément basculant (22, 100), ledit élément basculant (22,100) étant apte à basculer autour d'un axe de direction sensiblement transversale (21, 103, 203).

2. Système selon la revendication 1, pour lequel ledit bras extensible (24) supporte au moins une de ladite au moins une roue non entraînée (4).

3. Système selon l'une des revendications précédentes, pour lequel ledit moyen de préhension et de levage combinés et simultanés comprend au moins un dispositif de limitation du débattement angulaire (230, 130) d'au moins un élément basculant (22, 100).

4. Système selon l'une des revendications précédentes, pour lequel une butée d'accostage (40) est positionnée sur ledit bâti (23, 108) ou sur ledit élément basculant (22, 100).

5. Système selon l'une des revendications précédentes, pour lequel ledit dispositif de poussée (20) comprend au moins un galet (31, 32) d'axe transversal (34, 35) connecté audit bras extensible (24) ou audit bâti (23, 108).

6. Système selon la revendication 5, pour lequel ledit dispositif de poussée (20) comprend un premier et un deuxième galet (31, 32) d'axes transversaux (34, 35) fixés sur ledit bras extensible (24) ou sur ledit bâti (23, 108), ledit premier galet (31) étant configuré pour venir en contact de la roue (14) de l'objet roulant (13) avant le deuxième galet (32), l'altitude de l'axe du premier galet (31) étant inférieure à l'altitude de l'axe du deuxième galet (32).

7. Système selon la revendication 6, pour lequel le premier galet (31) a un diamètre inférieur au deuxième galet (32).

8. Système selon l'une des revendications précédentes, pour lequel ledit moyen d'attelage (5) est réglable en position longitudinale (P1, P2, P3) le long du châssis.

9. Système selon l'une des revendications précédentes, pour lequel le dispositif de poussée (20) comprend deux pièces guides (51a, 51b) s'étendant sensiblement dans la direction longitudinale (x), lesdites pièces guides (51a, 51b) étant configurées pour empêcher les roues (14) de l'objet roulant (13) de pivoter.

10. Système selon l'une des revendications précédentes, pour lequel au moins un élément basculant (22, 100) comprend un moyen de réglage de la largeur dudit élément basculant (22, 100), ledit moyen de réglage de la largeur dudit élément basculant (22, 100) étant de préférence un flasque mobile ou une cale.

11. Système selon l'une des revendications précédentes, pour lequel le système de propulsion électrique (1) comprend deux moyens de préhension et de levage combinés et simultanés, chaque moyen de préhension et de levage combinés et simultanés étant dédié à une roue (14) de l'objet roulant (13), les deux moyens de préhension et de levage combinés et simultanés étant mobile en translation transversale l'un par rapport à l'autre.

12. Système selon l'une des revendications précédentes, pour lequel ledit bâti (23, 108) est relié audit châssis (2) par une liaison glissière de direction transversale (30), de préférence par un actionneur.

13. Système selon l'une des revendications précédentes, pour lequel le moyen de préhension et de levage combinés et simultanés comprend un dispositif de relevage configuré pour garantir une garde au sol supérieure à une hauteur prédéfinie en position relevée, de préférence, la hauteur prédéfinie étant comprise entre 30 et 50 mm, et encore préférentiellement proche de 40 mm.

14. Système selon la revendication 13, pour lequel le dispositif de relevage comprend au moins un ressort de rappel et/ou au moins un contrepoids et/ou au moins une tige entraînée.

15. Système selon l'une des revendications précédentes, pour lequel une butée (120) est positionnée sur ledit bâti (23, 108) ou sur ledit bras extensible (24) pour assurer le contact de l'élément basculant (22, 100) en position relevée.

16. Attelage comprenant un objet roulant (13), de préférence un objet roulant (13) comprenant au moins une roue non orientable, et un système de propulsion électrique (1) selon l'une des revendications précédentes, ledit objet roulant (13) étant attelé audit système de propulsion électrique (1) par lesdits moyens d'attelage (5).

17. Procédé pour atteler un objet roulant (13) au système de propulsion électrique (1) selon l'une des revendications 1 à 15, comprenant les étapes suivantes :
a) on déplace le système de propulsion électrique (1) de manière à l'approcher d'au moins une roue (14) de l'objet roulant (13),
b) on allonge le bras extensible (24) de manière à permettre le positionnement de ladite au moins une roue (14) de l'objet roulant (13) entre l'élément basculant (22, 100) et le dispositif de poussée (20),
c) on déplace le système de propulsion électrique (1) de manière à ce que ladite au moins une roue (14) de l'objet roulant (13) soit positionnée entre l'élément basculant (22, 100) et le dispositif de poussée (20),
d) on raccourcit le bras extensible (24) de manière à ce que le dispositif de poussée (20) ou l'élément basculant (22, 100) vienne en contact avec ladite au moins une roue de l'objet roulant,
e) on continue le raccourcissement du bras extensible (24) de manière à ce que le dispositif de poussée (20) pousse ladite au moins une roue (14) de l'objet roulant (13) dans l'élément basculant (22, 100).

18. Procédé selon la revendication 17 pour atteler un objet roulant (13) au système de propulsion électrique (1), ledit système de propulsion électrique (1) comprenant deux moyens de préhension et de levage combinés et simultanés, ledit procédé comprenant les étapes suivantes :
a) on déplace le système de propulsion électrique (1) de manière à l'approcher de deux roues (14) de l'objet roulant (13),
b) on déplace transversalement au moins un des deux moyens de préhension et de levage combinés et simultanés par rapport à l'autre des deux moyens de préhension et de levage combinés et simultanés,
c) on allonge le bras extensible (24) de chaque moyen de préhension et de levage combinés et simultanés de manière à ce que l'écartement entre l'élément basculant (22, 100) et le dispositif de poussée (20) laisse passer la roue (14) de l'objet roulant (13),
d) on déplace transversalement au moins un des deux moyens de préhension et de levage combinés et simultanés par rapport à l'autre des deux moyens de préhension et de levage combinés et simultanés, en sens opposé de celui de l'étape b) jusqu'à ce que chaque roue (14) de l'objet roulant (13) soit positionnée entre un dispositif de poussée (20) et un élément basculant (22,100).
e) on raccourcit les bras extensibles (24) pour pousser chaque roue (14) de l'objet roulant (13) dans chaque élément basculant (22, 100) par le dispositif de poussée (20).

## Patentansprüche

1. Lösbares elektrisches Antriebssystem (1) für ein rollendes Objekt (13), wobei das Antriebssystem (1) ein Fahrgestell (2) umfasst, das mit mindestens einem von einer elektrischen Maschine (10) angetriebenen Rad (3), mindestens einem nicht angetriebenen Rad (4) und mindestens einem Mittel zum Ankuppeln (5) des elektrischen Antriebssystems (1) an das rollende Objekt (13) ausgestattet ist, **dadurch gekennzeichnet, dass** das Ankupplungsmittel (5) mindestens ein Mittel zum kombinierten und gleichzeitigen Greifen und Heben mindestens eines Rades (14) des rollenden Objekts (13) umfasst, und dadurch, dass das Mittel zum kombinierten und gleichzeitigen Greifen und Heben ein Gestell (23, 108), mindestens einen in einer Längsrichtung ausfahrbaren Arm (24), der mit dem Gestell (23, 108) verbunden ist, mindestens ein Schwenkelement (22, 100) und mindestens eine Schubvorrichtung (20) umfasst, wobei von dem Schwenkelement (22, 100) und der Schubvorrichtung (20) eines mit dem ausfahrbaren Arm (24) verbunden ist und das andere mit dem Gestell (23, 108) verbunden ist, wobei die Schubvorrichtung (20) geeignet ist, mindestens ein Rad (14) des rollenden Objekts (13) in der Längsrichtung (x) in das mindestens eine Schwenkelement (22, 100) zu schieben, wobei das Schwenkelement (22, 100) geeignet ist, um eine sich im Wesentlichen in Querrichtung erstreckende Achse (21, 103, 203) zu schwenken.

2. System nach Anspruch 1, wobei der ausfahrbare Arm (24) mindestens eines von dem mindestens einen nicht angetriebenen Rad (4) trägt.

3. System nach einem der vorhergehenden Ansprüche, wobei das Mittel zum kombinierten und gleichzeitigen Greifen und Heben mindestens eine Vorrichtung zur Begrenzung der Winkelauslenkung (230, 130) mindestens eines Schwenkelements (22, 100) umfasst.

4. System nach einem der vorhergehenden Ansprüche, wobei ein Anlegeanschlag (40) an dem Gestell (23, 108) oder an dem Schwenkelement (22, 100) positioniert ist.

5. System nach einem der vorhergehenden Ansprüche, wobei die Schubvorrichtung (20) mindestens eine Rolle (31, 32) mit quer angeordneter Achse (34, 35) umfasst, die mit dem ausfahrbaren Arm (24) oder mit dem Gestell (23, 108) verbunden ist.

6. System nach Anspruch 5, wobei die Schubvorrichtung (20) eine erste und eine zweite Rolle (31, 32) mit quer angeordneten Achsen (34, 35) umfasst, die an dem ausfahrbaren Arm (24) oder an dem Gestell (23, 108) befestigt sind, wobei die erste Rolle (31) dafür ausgelegt ist, vor der zweiten Rolle (32) mit dem Rad (14) des rollenden Objekts (13) in Kontakt zu kommen, wobei die Höhe der Achse der ersten Rolle (31) niedriger als die Höhe der Achse der zweiten Rolle (32) ist.

7. System nach Anspruch 6, wobei die erste Rolle (31) einen Durchmesser aufweist, der kleiner als derjenige der zweiten Rolle (32) ist.

8. System nach einem der vorhergehenden Ansprüche, wobei das Ankupplungsmittel (5) in der Längsposition (P1, P2, P3) entlang des Fahrgestells verstellbar ist.

9. System nach einem der vorhergehenden Ansprüche, wobei die Schubvorrichtung (20) zwei Führungsstücke (51a, 51b) umfasst, die sich im Wesentlichen in der Längsrichtung (x) erstrecken, wobei die Führungsstücke (51a, 51b) dafür ausgelegt sind zu verhindern, dass die Räder (14) des rollenden Objekts (13) schwenken.

10. System nach einem der vorhergehenden Ansprüche, wobei mindestens ein Schwenkelement (22, 100) ein Mittel zur Einstellung der Breite des Schwenkelements (22, 100) umfasst, wobei das Mittel zur Einstellung der Breite des Schwenkelements (22, 100) vorzugsweise ein beweglicher Flansch oder ein Keil ist.

11. System nach einem der vorhergehenden Ansprüche, wobei das elektrische Antriebssystem (1) zwei Mittel zum kombinierten und gleichzeitigen Greifen und Heben umfasst, wobei jedes Mittel zum kombinierten und gleichzeitigen Greifen und Heben für ein Rad (14) des rollenden Objekts (13) bestimmt ist, wobei die zwei Mittel zum kombinierten und gleichzeitigen Greifen und Heben relativ zueinander in Querrichtung translatorisch bewegbar sind.

12. System nach einem der vorhergehenden Ansprüche, wobei das Gestell (23, 108) mit dem Fahrgestell (2) durch eine in Querrichtung angeordnete Gleitschienenverbindung (30) verbunden ist, vorzugsweise durch einen Stellantrieb.

13. System nach einem der vorhergehenden Ansprüche, wobei das Mittel zum kombinierten und gleichzeitigen Greifen und Heben eine Hebevorrichtung umfasst, die dafür ausgelegt ist, in der gehobenen Position eine Bodenfreiheit zu garantieren, die größer als eine vordefinierte Höhe ist, wobei die vordefinierte Höhe vorzugsweise zwischen 30 und 50 mm liegt und noch stärker bevorzugt annähernd 40 mm beträgt.

14. System nach Anspruch 13, wobei die Hebevorrichtung mindestens eine Rückstellfeder und/oder mindestens ein Gegengewicht und/oder mindestens eine angetriebene Stange umfasst.

15. System nach einem der vorhergehenden Ansprüche, wobei ein Anschlag (120) am Gestell (23, 108) oder am ausfahrbaren Arm (24) positioniert ist, um den Kontakt des Schwenkelements (22, 100) in der gehobenen Position sicherzustellen.

16. Gespann, welches ein rollendes Objekt (13), vorzugsweise ein rollendes Objekt (13), das mindestens ein nicht ausrichtbares Rad umfasst, und ein elektrisches Antriebssystem (1) nach einem der vorhergehenden Ansprüche umfasst, wobei das rollende Objekt (13) an das elektrische Antriebssystem (1) durch die Ankupplungsmittel (5) angekuppelt ist.

17. Verfahren zum Ankuppeln eines rollenden Objekts (13) an das elektrische Antriebssystem (1) nach einem der Ansprüche 1 bis 15, welches die folgenden Schritte umfasst:
a) das elektrische Antriebssystem (1) wird so verlagert, dass es mindestens einem Rad (14) des rollenden Objekts (13) genähert wird,
b) der ausfahrbare Arm (24) wird so ausgefahren, dass die Positionierung des mindestens einen Rades (14) des rollenden Objekts (13) zwischen dem Schwenkelement (22, 100) und der Schubvorrichtung (20) ermöglicht wird,
c) das elektrische Antriebssystem (1) wird so verlagert, dass das mindestens ein Rad (14) des rollenden Objekts (13) zwischen dem Schwenkelement (22, 100) und der Schubvorrichtung (20) positioniert wird,
d) der ausfahrbare Arm (24) wird so eingefahren, dass die Schubvorrichtung (20) oder das Schwenkelement (22, 100) mit dem mindestens einen Rad des rollenden Objekts in Kontakt kommt,
e) das Einfahren des ausfahrbaren Armes (24) wird fortgesetzt, so dass die Schubvorrichtung (20) das mindestens eine Rad (14) des rollenden Objekts (13) in das Schwenkelement (22, 100) schiebt.

18. Verfahren nach Anspruch 17 zum Ankuppeln eines rollenden Objekts (13) an das elektrische Antriebssystem (1), wobei das elektrische Antriebssystem (1) zwei Mittel zum kombinierten und gleichzeitigen Greifen und Heben umfasst, wobei das Verfahren die folgenden Schritte umfasst:
a) das elektrische Antriebssystem (1) wird so verlagert, dass es zwei Rädern (14) des rollenden Objekts (13) genähert wird,
b) mindestens eines der zwei Mittel zum kombinierten und gleichzeitigen Greifen und Heben wird bezüglich des anderen der zwei Mittel zum kombinierten und gleichzeitigen Greifen und Heben in Querrichtung verlagert,
c) der ausfahrbare Arm (24) jedes Mittels zum kombinierten und gleichzeitigen Greifen und Heben wird so ausgefahren, dass der Abstand zwischen dem Schwenkelement (22, 100) und der Schubvorrichtung (20) das Rad (14) des rollenden Objekts (13) passieren lässt,
d) mindestens eines der zwei Mittel zum kombinierten und gleichzeitigen Greifen und Heben wird bezüglich des anderen der zwei Mittel zum kombinierten und gleichzeitigen Greifen und Heben in einer Richtung, die zu derjenigen von Schritt b) entgegengesetzt ist, in Querrichtung verlagert, bis jedes Rad (14) des rollenden Objekts (13) zwischen einer Schubvorrichtung (20) und einem Schwenkelement (22, 100) positioniert ist,
e) die ausfahrbaren Arme (24) werden eingefahren, um jedes Rad (14) des rollenden Objekts (13) durch die Schubvorrichtung (20) in das jeweilige Schwenkelement (22, 100) zu schieben.

## Claims

1. Removable electric propulsion system (1) for a rolling object (13), said propulsion system (1) comprising a chassis (2) equipped with at least one driven wheel (3) driven by an electric machine (10), at least one non-driven wheel (4) and at least one hitching means (5) for hitching said electric propulsion system (1) to said rolling object (13), **characterized in that** said hitching means (5) comprises at least one means for the combined and simultaneous gripping and lifting of at least one wheel (14) of said rolling object (13), and **in that** said combined and simultaneous gripping and lifting means comprises a frame (23, 108), at least one extendable arm (24) that can extend in a longitudinal direction and is connected to the frame (23, 108), at least one pivoting element (22, 100) and at least one pushing device (20), one of the pivoting element (22, 100) and the pushing device (20) being connected to said extendable arm (24) and the other being connected to the frame (23, 108), said pushing device (20) being able to push at least one wheel (14) of the rolling object (13) in said longitudinal direction (x) into said at least one pivoting element (22, 100), said pivoting element (22, 100) being able to pivot about a substantially transversely directed axle (21, 103, 203).

2. System according to Claim 1, wherein said extendable arm (24) supports at least one of said at least one non-driven wheel (4).

3. System according to either of the preceding claims, wherein said combined and simultaneous gripping and lifting means comprises at least one device (230, 130) for limiting the angular displacement of at least one pivoting element (22, 100).

4. System according to one of the preceding claims, wherein a docking bumper (40) is positioned on said frame (23, 108) or on said pivoting element (22, 100) .

5. System according to one of the preceding claims, wherein said pushing device (20) comprises at least one roller (31, 32) with a transverse axle (34, 35) connected to said extendable arm (24) or to said frame (23, 108).

6. System according to Claim 5, wherein said pushing device (20) comprises a first and a second roller (31, 32) with transverse axles (34, 35) attached to said extendable arm (24) or to said frame (23, 108), said first roller (31) being configured to come into contact with the wheel (14) of the rolling object (13) before the second roller (32), the height at which the axle of the first roller (31) is situated being lower than the height at which the axle of the second roller (32) is situated.

7. System according to Claim 6, wherein the first roller (31) has a smaller diameter than the second roller (32).

8. System according to one of the preceding claims, wherein the longitudinal position (P1, P2, P3) of said hitching means (5) along the chassis can be adjusted.

9. System according to one of the preceding claims, wherein the pushing device (20) comprises two guide pieces (51a, 51b) that extend substantially in the longitudinal direction (x), said guide pieces (51a, 51b) being configured to prevent the wheels (14) of the rolling object (13) from pivoting.

10. System according to one of the preceding claims, wherein at least one pivoting element (22, 100) comprises a means for adjusting the width of said pivoting element (22, 100), said means for adjusting the width of said pivoting element (22, 100) preferably being a movable flange or a wedge.

11. System according to one of the preceding claims, wherein the electric propulsion system (1) comprises two combined and simultaneous gripping and lifting means, each combined and simultaneous gripping and lifting means being assigned to one wheel (14) of the rolling object (13), the two combined and simultaneous gripping and lifting means being capable of transverse translational movement relative to one another.

12. System according to one of the preceding claims, wherein said frame (23, 108) is connected to said chassis (2) by a transversely directed slideway connection (30), preferably by an actuator.

13. System according to one of the preceding claims, wherein the combined and simultaneous gripping and lifting means comprises a raising device that is configured to ensure a ground clearance that exceeds a predefined height in the raised position, the predefined height preferably being between 30 and 50 mm, more preferably around 40 mm.

14. System according to Claim 13, wherein the raising device comprises at least one return spring and/or at least one counterweight and/or at least one driven rod.

15. System according to one of the preceding claims, wherein a bumper (120) is positioned on said frame (23, 108) or on said extendable arm (24) in order to make contact with the pivoting element (22, 100) in the raised position.

16. Hitch comprising a rolling object (13), preferably a rolling object (13) comprising at least one non-orientable wheel, and an electric propulsion system (1) according to one of the preceding claims, said rolling object (13) being hitched to said electric propulsion system (1) by said hitching means (5).

17. Method for hitching a rolling object (13) to the electric propulsion system (1) according to one of Claims 1 to 15, comprising the following steps of:
a) moving the electric propulsion system (1) closer to at least one wheel (14) of the rolling object (13),
b) extending the extendable arm (24) so as to allow said at least one wheel (14) of the rolling object (13) to be positioned between the pivoting element (22, 100) and the pushing device (20),
c) moving the electric propulsion system (1) such that said at least one wheel (14) of the rolling object (13) is positioned between the pivoting element (22, 100) and the pushing device (20),
d) retracting the extendable arm (24) such that the pushing device (20) or the pivoting element (22, 100) comes into contact with said at least one wheel of the rolling object, and
e) continuing to retract the extendable arm (24) such that the pushing device (20) pushes said at least one wheel (14) of the rolling object (13) into the pivoting element (22, 100).

18. Method according to Claim 17 for hitching a rolling object (13) to the electric propulsion system (1), said electric propulsion system (1) comprising two combined and simultaneous gripping and lifting means, said method comprising the following steps of:
a) moving the electric propulsion system (1) closer to two wheels (14) of the rolling object (13),
b) moving at least one of the two combined and simultaneous gripping and lifting means in translation relative to the other of the two combined and simultaneous gripping and lifting means,
c) extending the extendable arm (24) of each combined and simultaneous gripping and lifting means such that the wheel (14) of the rolling object (13) is able to pass through the gap between the pivoting element (22, 100) and the pushing device (20),
d) moving at least one of the two combined and simultaneous gripping and lifting means in translation relative to the other of the two combined and simultaneous gripping and lifting means, in the opposite direction to that in step b), until each wheel (14) of the rolling object (13) is positioned between a pushing device (20) and a pivoting element (22, 100), and
e) retracting the extendable arms (24) such that the pushing device (20) pushes each wheel (14) of the rolling object (13) into each pivoting element (22, 100).
